# EUROPEAN PATENT APPLICATION

(11) **EP 4 651 500 A1**
(43) Date of publication of application: **19.11.2025**
(21) Application number: 24813801.8
(22) Date of filing: 08.03.2024
(51) Int. Cl.: H04N 21/44, G06F 9/451

(54) **IMAGE PROCESSING METHOD AND ELECTRONIC DEVICE**

(30) Priority: 31.05.2023 CN 202310639151
(71) Applicant: Honor Device Co., Ltd., Shenzhen, Guangdong 518040 (CN)
(72) Inventor: YU, Jiaxin, Shenzhen, Guangdong 518040 (CN); SUN, Wenyong, Shenzhen, Guangdong 518040 (CN); ZHANG, Guangjin, Shenzhen, Guangdong 518040 (CN)
(74) Representative: Gill Jennings & Every LLP
(86) International application number: PCT/CN2024/080782
(87) International publication number: WO 2024/244595

(57) **Abstract**

Embodiments of this application provide an image processing method and an electronic device, and relate to the field of image processing, to effectively avoid a problem such as stuttering caused by a relatively long time consumed by an image drawing process. The method includes: receiving a first operation of a user; in response to the first operation, running a first application, and presenting an interface of the first application; receiving a second operation performed the user in the interface of the first application, where the second operation is a sliding operation; in response to the second operation, performing a first drawing operation in a first synchronization Vsync period to obtain a first image; and in response to the second operation, performing a second drawing operation in the first synchronization Vsync period to obtain a second image.

## Description

This application claims priority to Chinese Patent Application No. 202310639151.0, filed with the China National Intellectual Property Administration on May 31, 2023 and entitled "IMAGE PROCESSING METHOD AND ELECTRONIC DEVICE", which is incorporated herein by reference in its entirety.

### TECHNICAL FIELD

Embodiments of this application relate to the field of image processing, and in particular, to an image processing method and an electronic device.

### BACKGROUND

When providing a display function for a user, an electronic device frequently switches, under indication of the user, between consecutive frames of images for display.

For example, after the user inputs a sliding operation to the electronic device, the electronic device may continuously render a frame of image, and update a current display interface with the sliding operation of the user.

In this way, if one or more frames of images in consecutive frames of images cannot be rendered in time, different degrees of frame dropping or frame skipping may occur, which affects user experience.

### SUMMARY

This application provides an image processing method and an electronic device, to effectively avoid a problem such as stuttering caused by a relatively long time consumed by an image drawing process.

To achieve the foregoing technical objective, this application uses the following technical solutions:
According to a first aspect, an image processing method is provided. The method is applied to an electronic device. The method includes: receiving a first operation of a user; in response to the first operation, running a first application, and presenting an interface of the first application; receiving a second operation performed the user in the interface of the first application, where the second operation is a sliding operation; in response to the second operation, performing a first drawing operation in a first synchronization Vsync period to obtain a first image; and in response to the second operation, performing a second drawing operation in the first synchronization Vsync period to obtain a second image, where a moment at which the first Vsync period starts is a moment at which a first Vsync signal is received, and a moment at which the first Vsync signal period ends is a moment at which a second Vsync signal is received; the first Vsync signal and the second Vsync signal are two adjacent Vsync signals, and start time of the second drawing operation is later than start time of the first drawing operation; and the first image and the second image are images sequentially displayed by the electronic device in response to the second operation.

It should be noted that in this application, both the first drawing operation and/or the second drawing operation are specific implementations of a drawing operation. The drawing operation may include a complete process of waiting for a resource and rendering processing after a flutter framework is waken up.

In this way, after the first Vsync signal arrives and before the second Vsync signal arrives, the electronic device may draw a new image for at least two times, so that even if a drawing process of the second image consumes a relatively long time, it can be effectively ensured that drawing of the second image is completed before a Vsync signal indicating that the second image needs to be send for display arrives. Therefore, the following problem is avoided: Because the drawing time of the second image is relatively long, drawing of the second image is still not completed when a corresponding Vsync signal arrives, and the first image is continuously displayed in a plurality of Vsync signal periods, which causes a display stuttering problem.

Optionally, the method further includes: After the second Vsync signal is generated, the electronic device performs a first sending for display operation, where the first sending for display operation is used to control a display screen of the electronic device to display the first image; and after a third Vsync signal is generated, the electronic device performs a second sending for display operation, where the second sending for display operation is used to control the display screen of the electronic device to display the second image, where the third Vsync signal is later than the second Vsync signal, and the third Vsync signal is adjacent to the second Vsync signal.

In this way, after drawing of the first image is completed, the first image may be composited and displayed in a period after the second Vsync signal arrives. Correspondingly, after drawing of the second image is completed, the second image may be composited and displayed in a period after the third Vsync signal arrives. It may be understood that, because drawing of the second image is advanced to start before the second Vsync signal, drawing of the second image can be completed before the third Vsync signal arrives, thereby ensuring that the second image can be correctly composited and displayed after the third Vsync signal arrives.

Optionally, both duration between the first Vsync signal and the second Vsync signal and duration between the second Vsync signal and the third Vsync signal correspond to resolution of the display screen. For example, both the duration between the first Vsync signal and the second Vsync signal and the duration between the second Vsync signal and the third Vsync signal may be a reciprocal of the resolution of the display screen.

Optionally, a texture buffer queue TextureBufferQueue is configured in the electronic device, where the TextureBufferQueue includes at least one valid buffer buffer, and each of the at least one valid buffer stores one draw image. In this example, a length of a valid buffer field of the TextureBufferQueue in the electronic device may be a length of one buffer, or may be a length of a plurality of buffers. When the length of the valid buffer field of the TextureBufferQueue is a length of a plurality of buffers, it corresponds to that the TextureBufferQueue includes a plurality of valid buffers. It may be understood that, when the TextureBufferQueue includes a plurality of valid buffers, the TextureBufferQueue may simultaneously store a plurality of draw images that wait to be composite and sent for display.

Optionally, the at least one valid buffer includes a first buffer. The performing a first drawing operation in a first synchronization Vsync period to obtain a first image includes: performing the first drawing operation in the first Vsync period to obtain the first image, and storing the first image in the first buffer when the first buffer is empty.

Optionally, the at least one valid buffer includes a second buffer. The performing a second drawing operation in the first synchronization Vsync period to obtain a second image includes: performing the second drawing operation in the first Vsync period to obtain the second image, and storing the second image in the second buffer when the first buffer is not empty.

In this example, when drawing of the second image is completed, the first image is not consumed. In this way, the first image may continue to be stored in the first buffer, and the second image is stored in the second buffer.

Optionally, a sending for display priority of the first buffer is higher than that of the second buffer. That the electronic device performs a first sending for display operation includes: obtaining the first image from the first buffer with a higher sending for display priority, to perform composition based on the first image and send a composite image for display.

Optionally, after the electronic device performs the first sending for display operation, the method further includes: releasing the first image in the first buffer, where the first buffer is empty after releasing.

Optionally, after the first sending for display operation is performed, the method further includes: storing, in the first buffer, the second image in the second buffer, to release the second image in the second buffer.

Optionally, that the electronic device performs a second sending for display operation includes: obtaining the second image from the first buffer, to perform composition based on the second image and send a composite image for display.

In this way, different priorities are configured for buffers, regardless of how many valid buffers are included in the TextureBufferQueue, the electronic device may obtain, from the first buffer when composition and sending for display need to be performed, an image to be composited and sent for display.

Optionally, a callback queue is configured in the electronic device, and the callback queue is used to store a sending for display callback and/or a drawing callback. Before the electronic device performs the first drawing operation, the method further includes: After the first Vsync signal is generated, the electronic device determines that the callback queue includes a first drawing callback, where the first drawing callback includes first image information, and the first image information is used to draw the first image. That the electronic device performs a first drawing operation includes: The electronic device generates a first wakeup indication based on the first drawing callback, where the first wakeup indication carries the second image information, the first wakeup indication is used to wake up a flutter rendering module configured in the electronic device to perform a drawing operation based on the second image information; and the flutter rendering module performs the first drawing operation based on the first wakeup indication, to obtain the second image.

Optionally, that the electronic device performs a second drawing operation includes: The electronic device generates a second wakeup indication, where the second wakeup indication carries the second image information, and the second wakeup indication is used to wake up the flutter rendering module to perform a drawing operation based on the second image information; and the flutter rendering module performs the second drawing operation based on the second wakeup indication, to obtain the second image.

Optionally, the method further includes: After the first Vsync signal is generated, the electronic device determines that there is a second image that needs to continue to be drawn. That the electronic device generates a second wakeup indication includes: After determining that there is a second image that needs to continue to be drawn, the electronic device triggers generation of the second wakeup indication after preset duration.

Optionally, the preset duration corresponds to 2/3 of the first Vsync period.

In this way, solution implementation for performing an operation of drawing the second image in advance is provided. It may be understood that, in some other implementations, the preset duration may alternatively be flexibly configured based on an actual situation. For example, the electronic device may configure, based on average drawing duration of completed images, the preset duration to be greater than or equal to the average drawing duration, and the average drawing duration may be less than the first Vsync period. In this way, after drawing of the first image is completed, in the flutter framework, even if a next Vsync signal has not arrived, the electronic device may still start, based on an end of the preset duration, to trigger drawing of the second image.

Optionally, the method further includes: The electronic device performs encapsulation processing on a wakeup indication generated in a first encapsulation interval and a wakeup indication generated in a second encapsulation interval, so that a type of the wakeup indication related to the encapsulation processing is adjusted, where an adjusted type of the wakeup indication is a non-flutter type. A start point of the first encapsulation interval corresponds to the electronic device determining that the callback queue includes a drawing callback, and an end point of the first encapsulation interval corresponds to generating a wakeup indication corresponding to the drawing callback; and a start point of the second encapsulation interval corresponds to the electronic device generating the wakeup indication, and an end point of the second encapsulation interval corresponds to the electronic device determining, after a next Vsync signal is generated, whether the callback queue includes a drawing callback. Therefore, it is ensured that two or more wakeup indications do not occur in a same Vsync period, thereby avoiding a plurality of times of invalid wakeup of the flutter framework.

Optionally, before the electronic device performs the second sending for display operation, the method further includes: The electronic device obtains a quantity of valid buffers in the TextureBufferQueue. That the electronic device performs a second sending for display operation includes: When the quantity of valid buffers is greater than or equal to 1, the electronic device performs the second sending for display operation. Therefore, when a plurality of valid buffers are configured, before performing buffer consumption, the electronic device may implement subsequent accurate buffer consumption based on a quantity of remaining valid buffers.

Optionally, the drawing callback is a postAnimation callback, and the sending for display callback is a postTraversal callback.

According to a second aspect, this application further provides an electronic device. The electronic device includes a display screen, a memory, and one or more processors. The memory is coupled to the processor. The memory is configured to store computer program code. The computer program code includes computer instructions. When the processor executes the computer instructions, the electronic device is enabled to perform the technical solution provided in any one of the first aspect and the possible implementations of the first aspect.

According to a third aspect, this application further provides a chip system. The chip system is applied to an electronic device. The chip system may include one or more interface circuits and one or more processors. The interface circuit is interconnected to the processor through a line. The interface circuit is configured to receive a signal from a memory of the electronic device and transmit the signal to the processor, where the signal includes computer instructions stored in the memory. When the processor executes the computer instructions, the electronic device performs the technical solution provided in any one of the first aspect and the possible implementations of the first aspect.

According to a fourth aspect, this application further provides a computer-readable storage medium. The computer-readable storage medium includes computer instructions. When the computer instructions are run on an electronic device, the electronic device is enabled to perform the technical solution according to any one of the first aspect and the possible implementations of the first aspect.

According to a fifth aspect, this application further provides a computer program product. When the computer program product runs on a computer, the computer is enabled to perform the technical solution according to any one of the first aspect and the possible implementations of the first aspect.

It may be understood that the solutions according to the second aspect to the fifth aspect provided in this application may separately correspond to any one of the first aspect and the possible designs of the first aspect. Therefore, beneficial effects that can be achieved are similar, and details are not described herein again.

### BRIEF DESCRIPTION OF DRAWINGS

FIG. 1A to FIG. 1C is are schematic diagrams of interaction between interfaces in which a user inputs a page sliding operation;
FIG. 2 is a schematic diagram of logical composition of a rendering processing framework;
FIG. 3 is a schematic diagram of logic of producing and consuming a buffer in a texture buffer queue;
FIG. 4A to FIG. 4C are a schematic diagram of module interaction in buffer production and consumption;
FIG. 5 is a diagram of a time sequence of buffer production and consumption in a case;
FIG. 6 is a diagram of a time sequence of buffer production and consumption in another case;
FIG. 7 is a schematic diagram of software composition of an electronic device according to an embodiment of this application;
FIG. 8 is a schematic diagram of software composition of another electronic device according to an embodiment of this application;
FIG. 9A to FIG. 9C are a schematic diagram of module interaction in an image processing method according to an embodiment of this application;
FIG. 10 is a schematic diagram of software implementation for triggering to wake up a flutter framework in advance according to an embodiment of this application;
FIG. 11 is a schematic diagram of software implementation for triggering to wake up a flutter framework in advance according to an embodiment of this application;
FIG. 12 is a schematic diagram of software implementation for triggering to wake up a flutter framework in advance according to an embodiment of this application;
FIG. 13 is a schematic diagram of a time sequence of buffer production and consumption after a solution provided in this embodiment of this application is used;
FIG. 14 is a schematic diagram of command encapsulation logic according to an embodiment of this application;
FIG. 15 is a schematic diagram of logic of controlling a plurality of buffers according to an embodiment of this application;
FIG. 16 is a schematic diagram of logic of internal software implementation of controlling a plurality of buffers according to an embodiment of this application;
FIG. 17 is a schematic diagram of module interaction in an image processing method;
FIG. 18 is a schematic diagram of module interaction in an image processing method;
FIG. 19 is a diagram of a time sequence of buffer production and consumption in a case;
FIG. 20 is a schematic diagram of logic of producing and consuming a buffer in a texture buffer queue according to an embodiment of this application;
FIG. 21 is a schematic diagram of module interaction in an image processing method according to an embodiment of this application;
FIG. 22 is a schematic diagram of a time sequence of buffer production and consumption after a solution provided in this embodiment of this application is used;
FIG. 23 is a schematic diagram of composition of an electronic device according to an embodiment of this application; and
FIG. 24 is a schematic diagram of composition of a chip system according to an embodiment of this application.

### DESCRIPTION OF EMBODIMENTS

In the following descriptions, the terms "first" and "second" are used merely for the purpose of description, and shall not be construed as indicating or implying relative importance or implicitly indicating a quantity of indicated technical features. Therefore, a feature defined with "first" or "second" may explicitly or implicitly include one or more such features. In the descriptions of the embodiments, unless otherwise stated, "a plurality of' means two or more.

One or more applications may be installed in an electronic device. The electronic device may run the application to provide a user with a plurality of different functions.

For example, the electronic device is a mobile phone. The application installed in the electronic device may include a shopping application, a calendar application, a gallery, a Notepad, and the like.

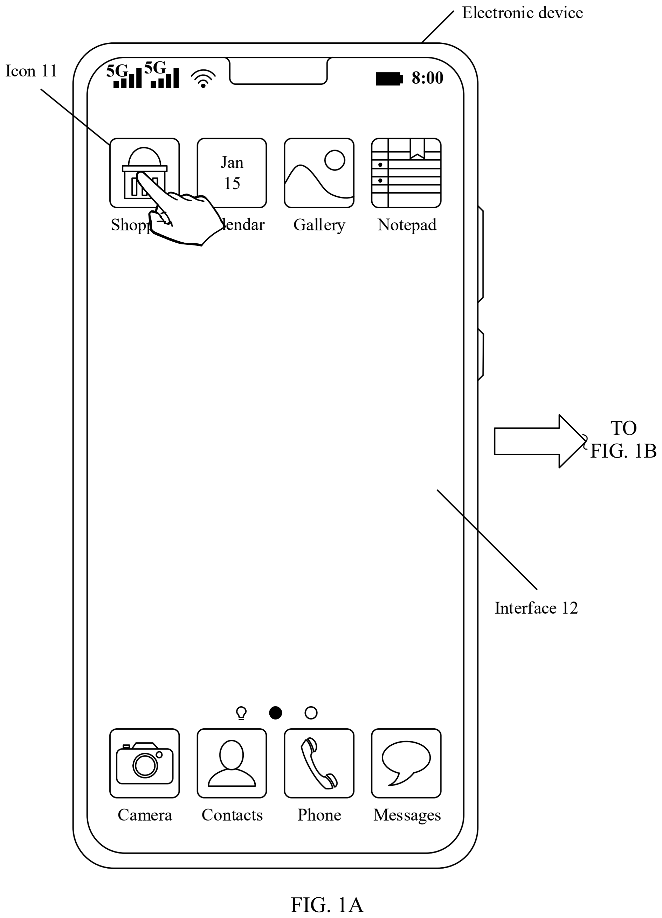

For example, referring to FIG. 1A, an interface 12 of the mobile phone may display an icon of each application. For example, the mobile phone may display, in the interface 12, an icon 11 corresponding to the shopping application.

When the user needs to use the shopping application, the user may input a corresponding operation for the icon 11, to indicate the electronic device to start running the shopping application. The corresponding operation input for the icon 11 may include a tap operation and the like. For example, the operation for the icon 11 may be a first operation.

In response to the tap operation input by the user, the mobile phone may run the shopping application, and switch to display, on a display screen, an interface provided by the shopping application.

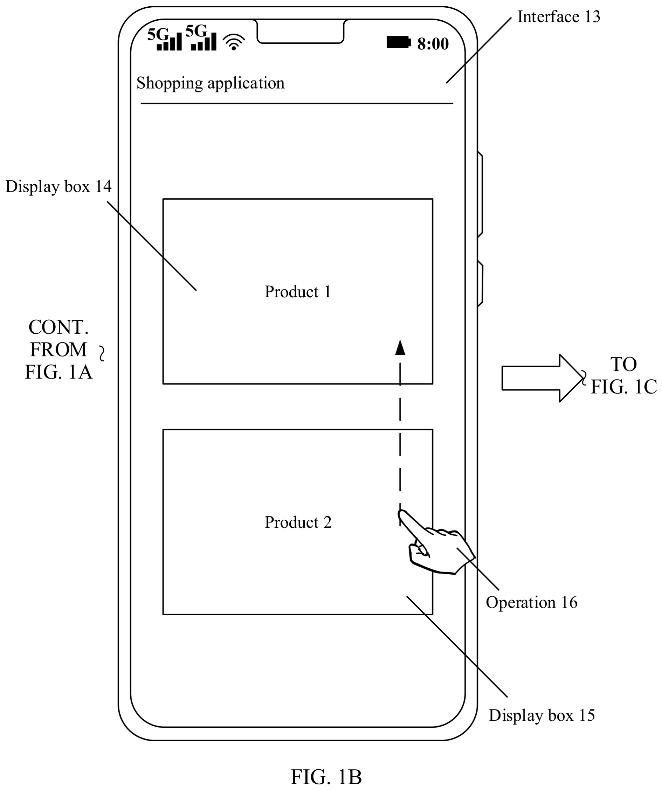

For example, after the user inputs the operation for the icon 11, the mobile phone may switch to display an interface 13 shown in FIG. 1B.

In an example, the interface 13 may include display windows that are of a plurality of different products and that are provided by the shopping application. For example, the interface 13 may include a display box 14 corresponding to a product 1 and a display box 15 corresponding to a product 2.

In this example, the shopping application further provides display windows corresponding to more products.

The user may input a switching indication in the interface 13, to indicate the mobile phone to refresh the interface and display a display window of another product. For example, the switching indication may include a sliding operation corresponding to an operation 16 that is input in the interface 13. For example, the switching indication may also be a second operation.

In response to an operation 31 input by the user, the mobile phone may refresh the interface and display an interface 17. The interface 17 may include display windows of more products different from the product 1 and the product 2. For example, the interface 17 may include a display box 18 corresponding to a product 3 and a display box 19 corresponding to a product 4.

In this way, during interaction with the user, the shopping application in the mobile phone may provide the user with more product information.

In the scenario shown in FIG. 1A to FIG. 1C, the electronic device may perform image rendering and display to implement display interfaces including the interface 12, the interface 13, the interface 17, and the like.

Image rendering may be performed by an operating system of the electronic device.

It may be understood that operating systems of different electronic devices may be different. Image rendering mechanisms of different operating systems are also different. Currently, a flutter framework may be configured in the electronic device. The flutter framework may be configured to perform complete rendering processing on an interface element, and an operation such as sending for display is further implemented by using a native framework of the electronic device. In this way, image rendering processes in different operating systems can be unified to some extent, thereby improving code compatibility.

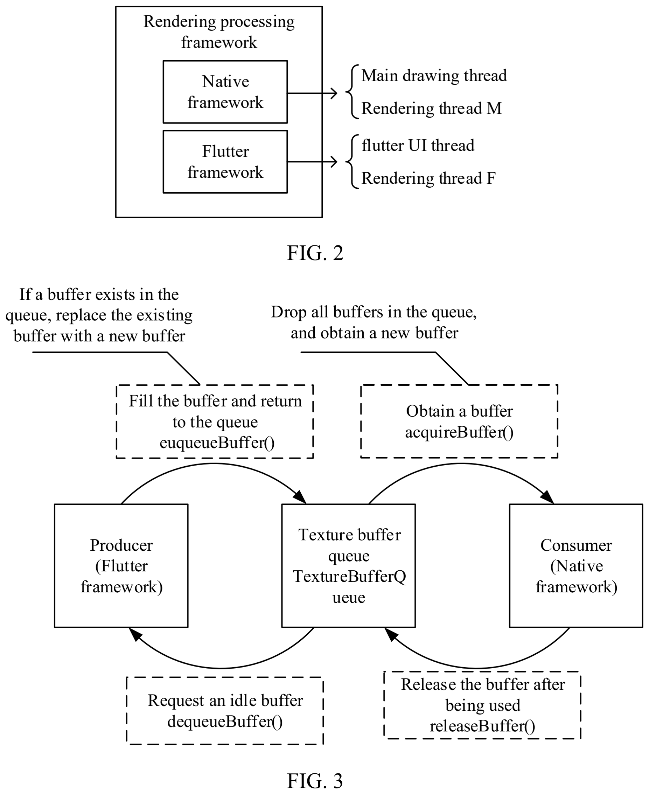

In this application, with reference to FIG. 2, an example in which a framework participating in rendering processing includes a native framework and a flutter framework is used. Threads related to image rendering that are performed by the native framework may be collectively referred to as a main thread. Correspondingly, threads related to image rendering that are performed by the flutter framework may be collectively referred to as a flutter thread.

For example, the main thread may include a main drawing thread, which may alternatively be referred to as a main UI thread. The main thread may further include a rendering thread M used to perform image rendering processing. The flutter thread may include a flutter UI thread and a rendering thread F used to perform image rendering processing.

FIG. 3 shows a logical implementation in which a flutter framework cooperates with a native framework in rendering an image rendering and sending the image for display.

In this example, one application may correspond to one texture buffer queue (TextureBufferQueue). Currently, the texture buffer queue may include a buffer (buffer), configured to store display content that has been rendered.

In the logical implementation shown in FIG. 3, the flutter framework may serve as a producer of buffer content. For example, a flutter UI thread may request an idle buffer from the TextureBufferQueue by using a dequeueBuffer() function. A rendering thread F of the flutter framework may be used to render a new frame of image to obtain display content of a next frame of image. Next, the flutter UI thread may fill the display content of the next frame of image in the buffer by using a queueBuffer() function, and return the buffer to the queue.

Correspondingly, the native framework may serve as a consumer of buffer content. For example, the native framework may obtain a buffer from the TextureBufferQueue by using an acquireBuffer() function. The buffer may store display content of a frame of image filled in by the flutter framework. Therefore, the native framework may send, for display, the content in the obtained buffer by using a SurfaceFlinger, to display the frame of image on a display screen of an electronic device. In addition, the native framework may further release, by using a releaseBuffer() function, the buffer after performing sending for display.

In some implementations, after the native framework obtains the buffer from the TextureBufferQueue and sends the buffer for display, the buffer in the TextureBufferQueue is empty. Correspondingly, the flutter framework may continue to produce a new buffer by using the logic shown in FIG. 3, so that the native framework subsequently consumes the new buffer. This is performed cyclically, so that consecutive frames of images can be rendered and sent for display.

It should be noted that, as shown in FIG. 3, in implementation of an existing solution, when the euqueueBuffer() function is performed, if a buffer exists in the queue, a new buffer is used to replace the existing buffer. This corresponds to that a maximum of one buffer is configured in the TextureBufferQueue. When the acquireBuffer() function is performed, all buffers in the queue are dropped, and a new buffer is obtained. The Drop operation corresponds to discarding content in all the buffers in the queue. In this way, a new frame of image can be draw and rendered in the new buffer.

As shown in the buffer production and consumption logic shown in FIG. 3, as the consumer of the buffer, the native framework needs to establish an association with the flutter framework between buffer producers, to ensure that when a consumable buffer exists, the buffer is obtained from the TextureBufferQueue to send for display and consumption. Based on the association between the native framework and the flutter framework, the native framework may know, from the flutter framework, that after a next Vsync signal arrives, the flutter framework needs to be waken up to draw a subsequent frame of image, that is, to produce a buffer that needs to be consumed subsequently.

It may be understood that the Vsync signal in embodiments of this application may be an indication signal. When an application needs to display or draw an image, the application may apply for a Vsync signal to the electronic device (for example, the surfaceflinger). Correspondingly, the surfaceflinger may send the Vsync signal to the application based on a specific period. For example, the specific period may correspond to a refresh period of the display screen. The refresh period may refer to a market between two adjacent frames of images displayed corresponding to a refresh rate. For example, corresponding to the display screen, after an N^{th} frame of image is displayed for duration TL1, an (N+1)^{th} frame of image is switched to for display. Therefore, the refresh period (or referred to as a refresh interval) may be the duration TL1.

In this application, with reference to the example in FIG. 1B, an example in which a user inputs a page sliding operation (for example, the operation 16) in a main interface of the shopping application is used. Then, the shopping application may receive a plurality of Vsync signals such as a first Vsync signal and a second Vsync signal from the surfaceflinger, and the shopping application may send the received Vsync signal to the native framework, to trigger sending of a corresponding image for display and consumption and drawing and production of a new image. For example, after the user inputs the page sliding operation, the shopping application may indicate, by using the plurality of Vsync signals such as the first Vsync signal and the second Vsync signal, the electronic device to produce and consume a plurality of frames of images (for example, an N^{th} frame of image and an (N+1)^{th} frame of image). From another perspective, the plurality of frames of images may be images sequentially displayed on the display screen by the electronic device in response to the page sliding operation input by the user.

In an example, the flutter framework may implement the association between the native framework and the flutter framework by registering one or more callbacks (callback) with the native framework.

For example, the one or more callbacks may include a postTraversal callback and a postAnimation callback.

The postTraversal callback may be used to indicate the native framework that a new buffer is already produced and placed into the TextureBufferQueue. Correspondingly, when the postTraversal callback has been received, after a new Vsync signal arrives, the native framework may perform a Traversal method to obtain a buffer from the TextureBufferQueue for consumption.

The postAnimation callback may be used to indicate the native framework that after sending for display corresponding to a next Vsync signal, a subsequent frame of image needs to be rendered and displayed. Correspondingly, when the postAnimation callback has been received, the native framework may perform an Animation method after a new Vsync signal arrives, and send a wakeup indication to the flutter framework, so that the flutter framework can produce, based on the wakeup indication, a buffer corresponding to a subsequent frame of image.

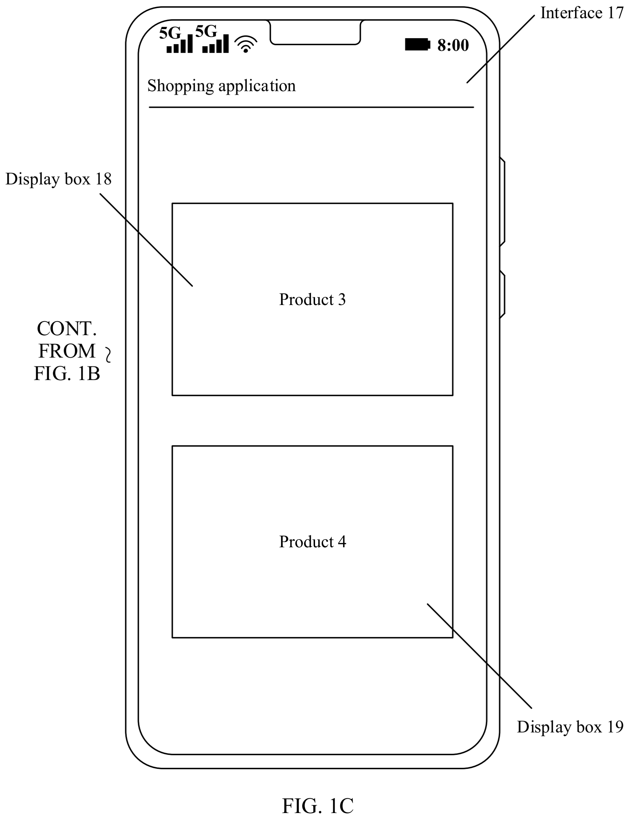

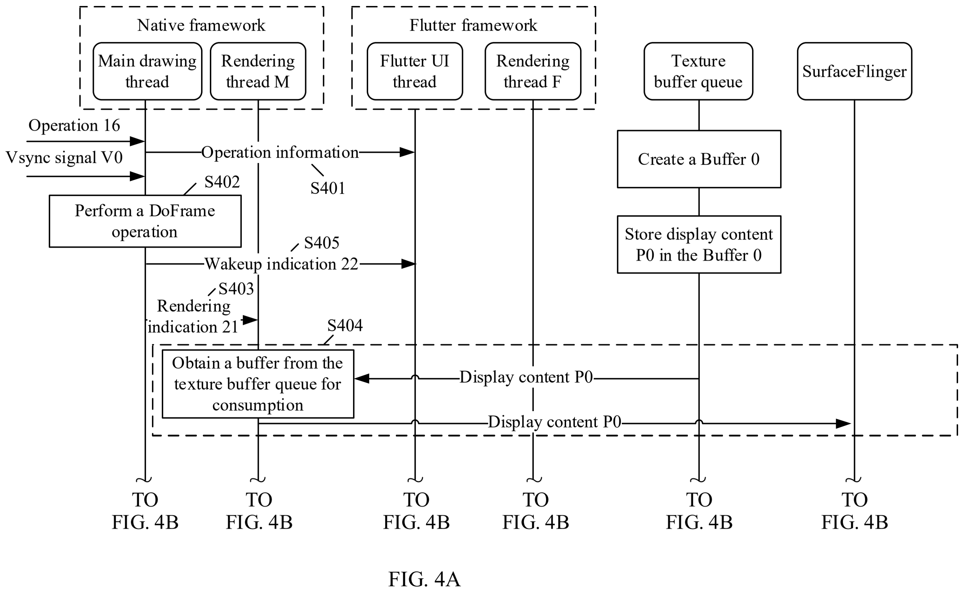

With reference to an example in FIG. 4A to FIG. 4C, the following uses an example to describe a process of rendering switching between the interface 13 and the interface 17 in the scenario shown in FIG. 1B and FIG. 1C.

It may be understood that, in a process of switching from the interface 13 to the interface 17 in FIG. 1B and FIG. 1C, the electronic device may draw a plurality of consecutive frames of images under indication of the operation 16 of the user. Correspondingly, the electronic device may perform continuous sliding display in the interface. A start point of the continuous sliding display may be the interface 13 corresponding to receiving of the operation 16 (for example, pressing of a sliding operation). An end point of the continuous sliding display may be the interface 17 when the operation 16 ends (for example, releasing of a finger from the sliding operation). In the example in FIG. 4 A to FIG. 4C, a process of drawing any frame of image (for example, an N^{th} frame of image) and sending the frame of image for display in the interface 13 to the interface 17 is used as an example. The example in FIG. 4 A to FIG. 4C shows a process of sending the N^{th} frame of image and an (N+1)^{th} frame of image for display. An image sent for display in the N^{th} frame of image may be obtained through rendering in a process of processing a previous image. Correspondingly, in a process of processing the (N+1)^{th} frame of image, the electronic device may further render a next frame of image, that is, an (N+2)^{th} frame of image.

As shown in FIG. 4 A to FIG. 4C, the drawing the N^{th} frame of image and sending the N^{th} frame of image for display may include the following steps.

S401: A main drawing thread receives the operation 16 input by the user, and transparently transmits operation information to a flutter UI thread.

For example, with reference to the example in FIG. 1A, after running an application, the electronic device may display an interface corresponding to the application.

The user may input various operations in the interface of the application. For example, the user may input the operation 16 (such as a sliding operation) in an interface (such as the interface 13) of a running shopping application, to indicate the electronic device to perform page sliding.

Correspondingly, the electronic device may transparently transmit, to the flutter UI thread for processing, the operation information input by the user.

In this example, the sliding operation corresponding to the operation 16 input by the user may include a plurality of consecutive sub-operations.

For example, the sliding operation may include the following sub-operations: pressing at a position 1, continuously pressing and sliding along a track 2, and releasing (that is, releasing a finger) at a position 3 corresponding to an end point of the track 2.

In this way, the main drawing thread may send operation information corresponding to each sub-operation to the flutter UI thread for processing. One piece of operation information may include at least one of the following: an operation type (such as pressing, sliding, or releasing a finger) corresponding to a current moment, and coordinate information on a display screen.

In other words, when the user inputs consecutive operations shown in the operation 16, the main drawing thread may correspondingly separately and continuously transmit, to the flutter UI thread, operation information of the operations input by the user, so that the flutter UI thread determines whether a plurality of consecutive frames of images need to be drawn, and performs rendering processing on each frame of image.

It should be noted that in some implementations, when determining, based on the operation information, that a rendering operation needs to be performed on at least one subsequent frame of image, with reference to the description in FIG. 3, a flutter framework may register a postTraversal callback and a postAnimation callback with a native framework, so that the native framework can perform corresponding consumption and wakeup operations after a next Vsync signal arrives.

S402: The main drawing thread receives a Vsync signal V0, and triggers execution of a DoFrame operation.

In a process of performing image rendering processing, the electronic device may generate a plurality of Vsync signals corresponding to a refresh rate of a display screen. Each Vsync signal may be used to indicate to render a frame of image and send the frame of image for display.

In this example, the Vsync signal V0 may be included in the plurality of Vsync signals. The Vsync signal V0 may be used to indicate to send the N^{th} frame of image for display and render the (N+1)^{th} frame of image. Display content of the N^{th} frame of image may be drawn and stored in a TextureBufferQueue by the flutter framework after a previous Vsync signal before the Vsync signal V0 arrives.

Correspondingly, after receiving the Vsync signal V0, the main drawing thread may trigger execution of the doFrame operation.

For example, the doFrame operation may include an animation operation used to perform animation-related processing, a traversal operation used to perform processing related to LayerTree traversal, and the like.

Then, the electronic device may send the N^{th} frame of image for display by using the following S403-S404. The electronic device may further render the (N+1)^{th} frame of image by using the following S405-S406. It should be noted that, the solution implementation shown in FIG. 4 A to FIG. 4C does not constitute a limitation on a sequence of sending the N^{th} frame of image for display and rendering the (N+1)^{th} frame of image. In different implementations, processing processes of sending the N^{th} frame of image for display and rendering the (N+1)^{th} frame of image may be performed in serial, or the processing processes of sending the N^{th} frame of image for display and rendering the (N+1)^{th} frame of image may be performed simultaneously.

It may be understood that, before delivering a rendering indication 21 corresponding to S403 and delivering a wakeup indication 22 corresponding to S405, the main drawing thread may perform traversal search processing on a traversal queue.

The traversal queue may also be referred to as a callback queue. The traversal queue may include one or more callbacks received by the main drawing thread, and each callback may correspond to one or more functions. When traversing the callback, the main thread may perform a function configured in the callback to perform a corresponding operation.

For example, with reference to the foregoing description, in this example, when the main drawing thread performs the DoFrame operation corresponding to S402, the traversal queue may include a postTraversal callback and a postAnimation callback.

In this case, when traversing the postTraversal callback, the main drawing thread may generate the corresponding rendering indication 21 based on one or more functions configured in the postTraversal callback, and further perform delivery processing corresponding to S403.

When traversing the postAnimation callback, the main drawing thread may generate the corresponding wakeup indication 22 based on one or more functions configured in the postAnimation callback, and further perform delivery processing corresponding to S405.

In this embodiment of this application, that the wakeup indication 22 is delivered before the rendering indication 21 is delivered is used as an example.

The following respectively describes a process of buffer consumption based on the postTraversal callback (that is, sending a new image for display and consumption) and a process of buffer production based on the postAnimation callback (that is, rendering a next frame of image).

S403: The main drawing thread delivers the rendering indication 21 to a rendering thread M.

The rendering indication 21 may be used to indicate the rendering thread M to perform display-related processing on the N^{th} frame of image by using a draw (draw) command.

S404: The rendering thread M obtains a buffer from a texture buffer queue for consumption.

In this example, before the current Vsync signal V0 arrives, the electronic device may create a Buffer 0 in a TextureBufferQueue of the shopping application corresponding to the current operation, and store display content P0 in the Buffer 0. The process may be performed by the flutter framework after a previous Vsync signal arrives.

Correspondingly, in the S404, after receiving the rendering indication 21, the rendering thread M may obtain the Buffer 0 from the TextureBufferQueue for consumption. For example, the rendering thread M may obtain, by using an acquireBuffer() function, the buffer 0 and the display content P0 stored in the buffer 0. The rendering thread M may transmit the display content P0 to s SurfaceFlinger, so that the SurfaceFlinger performs composition processing based on the display content P0, and therefore displays the N^{th} frame on the display screen. For another example, the rendering thread M may release the consumed buffer 0 by using a releaseBuffer() function.

In this way, after completing the S404, an available buffer in the TextureBufferQueue is empty.

S405: The main drawing thread delivers the wakeup indication 22 to the flutter UI thread.

The wakeup indication 22 may be used to indicate the flutter framework to render a new frame of image. With reference to the description in S402, in this example, as shown in FIG. 4A, the S405 may be performed before S403. Generally, a production process of a new buffer takes a relatively long time. Therefore, in this example, although buffer consumption is triggered after buffer production, consumption of an existing buffer may be completed before production of the new buffer is completed.

With reference to the description in S401, the main drawing thread may perform the S405 when the postAnimation callback sent by the flutter framework has been received.

For example, the wakeup indication 22 may carry a timestamp and corresponding rendering information.

The timestamp corresponds to a moment, and the timestamp is used to indicate to perform image rendering processing after the corresponding moment.

Correspondingly, the rendering information carried in the wakeup indication 22 may correspond to rendering-related information whose content needs to be displayed after the corresponding moment of the timestamp. For example, the rendering information may include vertex information, color information, and the like that are required by a rendering interface after the moment corresponding to the timestamp arrives.

S406: The Flutter UI thread indicates a rendering thread F to draw a new frame of image, and store the new frame of image in the texture buffer queue.

For example, in some embodiments, the flutter UI thread may make a response after the corresponding moment based on the timestamp carried in the wakeup indication 22.

For example, the moment of the timestamp carried in the wakeup indication 22 is a moment timeA. Therefore, after receiving the wakeup indication 22, the flutter UI thread may indicate, when the timeA arrives, the rendering thread F to perform rendering processing on a new image based on the rendering information carried in the wakeup indication 22.

In this way, when the timeA arrives, the flutter UI thread may deliver a drawing indication 23 to the rendering thread F, to indicate the rendering thread F to render the (N+1)^{th} frame of image based on the rendering information carried in the wakeup indication 22.

In response to the drawing indication 23, the rendering thread F may render the (N+1)^{th} frame of image. For example, corresponding display content P1 may be obtained by performing rendering processing on the (N+1)^{th} frame of image. In this application, the (N+1)^{th} frame of image corresponding to the display content P1 may also be referred to as a first image.

It may be understood that, during frame image drawing, the rendering thread F needs to store intermediate data and a drawing result by using a corresponding buffer.

In this way, with reference to the description in FIG. 3, after receiving the drawing indication 23, the rendering thread F may obtain a buffer (such as a buffer 1) from the TextureBufferQueue, to render the (N+1)^{th} frame of image. Therefore, after the rendering thread F completes rendering of the (N+1)^{th} frame of image, a rendering result corresponding to the (N+1)^{th} frame of image may be stored in the buffer 1, that is, the display content P1 is stored in the buffer 1.

The rendering thread F or the flutter UI thread may further place the buffer 1 storing the display content P1 into the TextureBufferQueue, to be used for next consumption by the native framework.

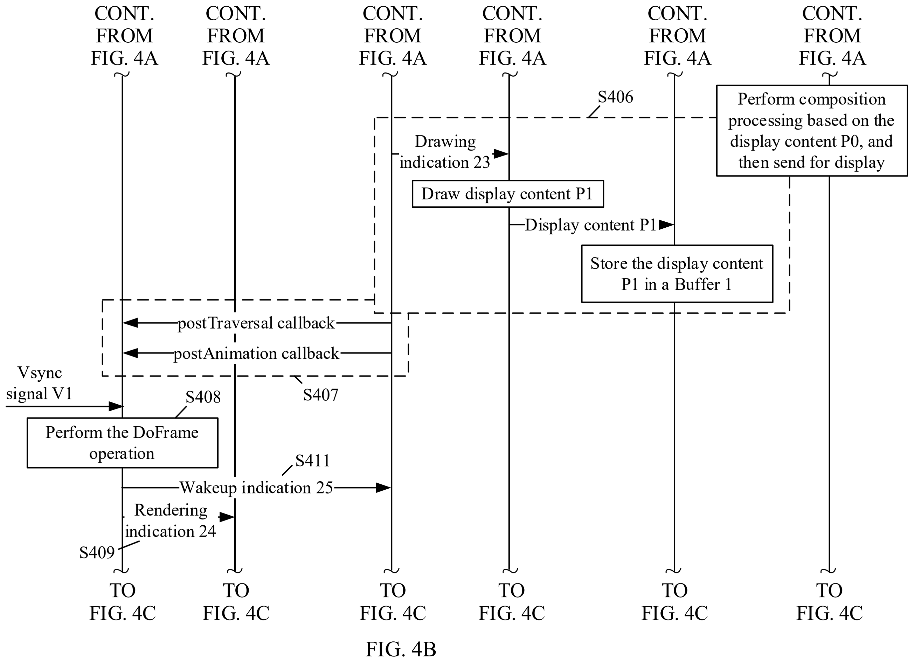

In some implementations, as shown in FIG. 4B, after a new buffer (such as the buffer 1) is produced and placed into the TextureBufferQueue, the flutter UI thread may perform S407, that is, register the postTraversal callback and the postAnimation callback with the main drawing thread, so that after a next Vsync signal arrives, the native framework and flutter framework can be performed to continue a new round of sending a buffer for display and consumption and producing a new buffer.

Therefore, through the operations in S402-S406, the electronic device sends the N^{th} frame of image for display and render the (N+1)^{th} image frame of image. In addition, through the operation in S407, the electronic device can further continue to consume and produce a subsequent frame of image.

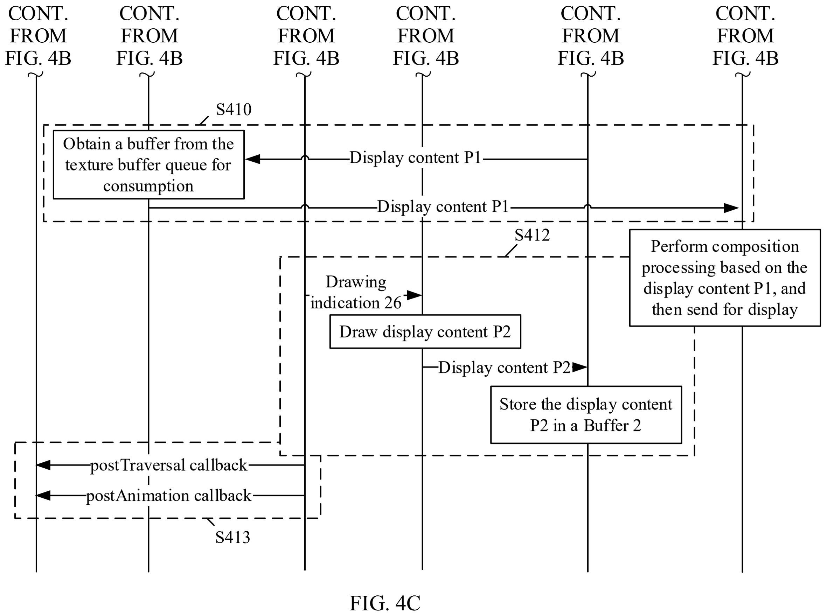

For example, as shown in FIG. 4B and FIG. 4C, after a Vsync signal V1 is received, the solution may further include the following steps.

S408: The main drawing thread performs the DoFrame operation.

For the operation in the S408, refer to S402.

In this example, with reference to the description of S407, in response to the postTraversal callback, the DoFrame operation may include performing a Traversal method to consume a buffer. Specifically, the following S409-S410 may be triggered.

In addition, in response to the postAnimation callback, the DoFrame operation may further include performing an Animation method to produce a buffer. Specifically, the following S411-S412 may be triggered.

S409: The main drawing thread sends a rendering indication 24 to the rendering thread M.

For example, the rendering indication 24 may be used to indicate, by using a Draw command, the rendering thread M to draw the (N+1)^{th} frame of image and send the (N+1)^{th} frame of image for display.

With reference to the description in S406, the newly produced buffer 1 may be stored in the current TextureBufferQueue, and the display content P1 corresponding to the (N+1)^{th} frame of image may be stored in the buffer 1.

Therefore, the rendering indication 24 may also be used to indicate the rendering thread M to consume a buffer in the current TextureBufferQueue, to send the (N+1)^{th} frame of image for display and consumption.

S410: The rendering thread M obtains a buffer from the texture buffer queue (that is, the TextureBufferQueue) for consumption.

Therefore, the rendering thread M may obtain the currently stored buffer 1 from the TextureBufferQueue, and sends the display content P1 in the buffer 1 to the surfaceflinger for display. Similar to the description in S404, after the buffer 1 is consumed, the buffer 1 may be released, and the buffer in the corresponding TextureBufferQueue is empty.

Correspondingly, the surfaceflinger may perform composition processing based on the display content P1, and therefore displays the (N+1)^{th} frame of image on the display screen.

In a process of performing the DoFrame operation, in addition to completing consumption of the buffer 1, the electronic device may further produce, by using the following S411-S412, a buffer corresponding to a next frame of image.

S411: The main drawing thread sends a wakeup indication 25 to the flutter UI thread.

For example, for execution of this step, refer to the description in S405.

The wakeup indication 25 may also carry a corresponding timestamp and rendering information. Therefore, the flutter framework may render a next frame (for example, the (N+2)^{th} frame) of image based on the timestamp and the rendering information.

S412: The Flutter UI thread indicates the rendering thread F to draw a new frame of image, and store the new frame of image in the texture buffer queue.

For example, the flutter UI thread may send a drawing indication 26 to the rendering thread F. In some implementations, the drawing indication 26 may be sent after a moment corresponding to the timestamp carried in the wakeup indication 25.

In response to the drawing indication 26, the rendering thread F may draw, based on the rendering information carried in the wakeup indication 25, display content P2 corresponding to the (N+2)^{th} frame of image. The rendering thread F may further store the display content P2 in a new buffer (such as a buffer 2) in the TextureBufferQueue. In this application, the (N+2)^{th} frame of image corresponding to the display content P2 may also be referred to as a second image.

With reference to the description in FIG. 3, the rendering thread F may obtain the buffer 2 from the TextureBufferQueue, and renders the display content P2 in the buffer 2. After completing the rendering, the rendering thread F may further place the buffer 2 back to the TextureBufferQueue.

In this way, rendering of the (N+2)^{th} frame of image can be completed.

Similar to the operation in S407, the flutter framework may perform S413 after completing production of the buffer corresponding to the (N+2)^{th} frame of image, that is, initiate the postTraversal callback and the postAnimation callback to the main drawing thread. Therefore, after a subsequent Vsync signal arrives, the electronic device may perform corresponding sending for display and/or rendering of a new image based on a procedure similar to S402-S407 or S408-S413.

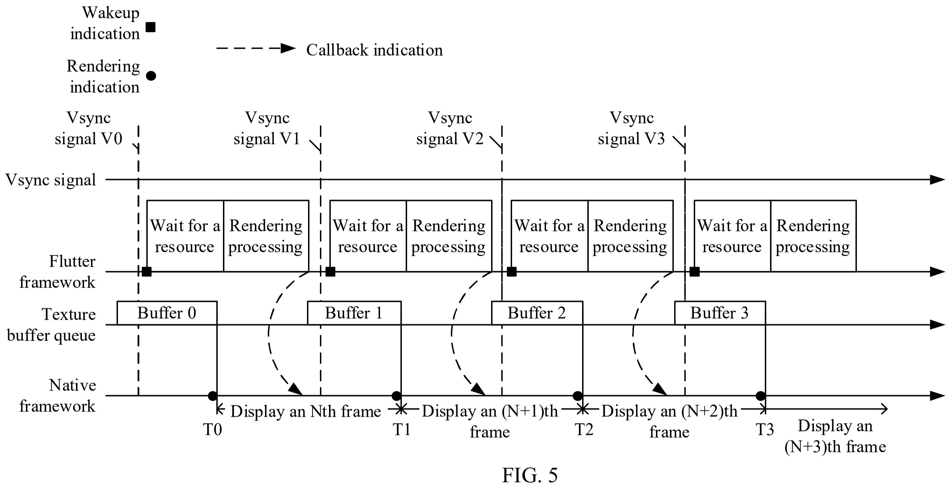

To describe the process shown in FIG. 4A to FIG. 4C more clearly, FIG. 5 is a schematic diagram of timing logic in a process of sending an image for display and rendering an image.

As shown in FIG. 5, before the Vsync signal V0 arrives, the TextureBufferQueue may include the produced buffer 0 corresponding to the N^{th} frame of image. Before the Vsync signal V0 arrives, the main drawing thread may receive the postTraversal callback and the postAnimation callback from the flutter framework. Therefore, after receiving the Vsync signal V0, the main drawing thread may trigger DoFrame to consume the buffer 0 and produce the buffer 1 corresponding to the new (N+1)^{th} frame of image.

For example, after receiving the Vsync signal V0, the native framework may indicate, by using a rendering indication, the corresponding rendering thread M to consume the current buffer 0. For example, at a moment T0, the native framework completes sending of the buffer 0 for display and consumption.

After receiving the Vsync signal V0, the native framework may further wake up, by using a wakeup indication, the flutter framework to produce a buffer corresponding to a new frame of image. For example, before the next Vsync signal V1 arrives, the flutter framework may waiting for a resource and rendering processing, thereby storing, in the TextureBufferQueue, the buffer 1 that includes the (N+1)^{th} frame of image and that is obtained through rendering. Waiting for a resource (also referred to as Runnable) may correspond to a process of waiting, after the flutter UI thread is waken up, for the electronic device to allocate a corresponding processing resource (such as a computation resource or a storage resource). After the waited resource is allocated, the flutter UI thread may indicate the rendering process F to perform rendering processing on a new frame of image, that is, corresponding to a Running phase.

It may be understood that, with reference to the description in S407 in FIG. 4B, in this example, the flutter framework may further send a callback indication to the native framework, where the callback indication may include the postTraversal callback and the postAnimation callback. In this way, after a next Vsync signal arrives, the main drawing thread may perform send, based on the received postTraversal callback, the buffer 1 for display and consumption, and wakes up, based on the postAnimation callback, the flutter framework to produce a new buffer.

In the example in FIG. 5, after receiving the Vsync signal V1, the native framework may cooperate with the flutter framework to perform buffer consumption (such as consumption of the buffer 1) and production of a new buffer (such as the buffer 2) that are similar to those in the foregoing example. The Flutter framework may also send the postTraversal callback to the native framework after placing the buffer 2 into the TextureBufferQueue, to facilitate sending for display in a next period (that is, after a next Vsync signal arrives). In addition, when determining that a new image needs to be rendered, the flutter framework may send the postAnimation callback to the native framework before the next period arrives (that is, before the next Vsync signal arrives), so that the native framework wakes up the flutter framework to render a new buffer after the next period arrives.

In this example, an example in which the native framework completes, at a moment T1, sending the buffer 1 corresponding to the (N+1)^{th} frame of image for display and consumption.

By analogy, at a subsequent T2 moment, the native framework may complete sending the buffer 2 corresponding to the (N+2)^{th} frame of image for display and consumption. The buffer 2 may be produced by the flutter framework in a period between the Vsync signal V1 and a Vsync signal V2.

At a subsequent moment T3, the native framework may complete sending of a buffer 3 corresponding to an (N+3)^{th} frame of image for display and consumption. The buffer 3 may be produced by the flutter framework in a period between the Vsync signal V2 and a Vsync signal V3.

In this way, the electronic device may display the N^{th} frame of image between frames from T0 to T1, the electronic device may display the (N+1)^{th} frame of image between frames from T1 to T2, and the electronic device may display the (N+2)^{th} frame of image from T2 to T3. In a display frame after T3, the electronic device may correspondingly display the (N+3)^{th} frame of image. In this way, through the solution implementation shown in FIG. 4A to FIG. 4C, the electronic device may continuously display, in time, page update corresponding to a sliding operation (for example, the operation 16) of a user. The display frame may correspond to a current refresh rate of the display screen. Duration of a display frame is based on display duration of one frame of image corresponding to the refresh rate.

It can be learned that, to enable display frames to display frames of images consecutively and accurately, it is required that a frame of image that currently needs to be displayed can be successfully produced and placed into the TextureBufferQueue in a process of displaying a previous frame of image.

However, even for consecutive frames of images, there is a case in which a frame of image that needs to be displayed cannot be produced and placed into the TextureBufferQueue in time.

For example, time for waiting for a resource is relatively long before rendering processing is performed on a new frame of image. This may be caused by relatively heavy load of the current electronic device or a relatively low priority corresponding to a current command for configuring a resource. As a result, rendering processing cannot be performed in time, and consequently, a buffer that currently needs to be consumed cannot be rendered and placed into the TextureBufferQueue in time.

For another example, in a process of performing rendering processing on a new frame of image, load of the current electronic device is relatively heavy, and computation allocation is insufficient, or elements of a currently drawn frame of image are relatively complex or are of a relatively large quantity, resulting in a relatively long rendering time. As a result, a buffer of the frame of image cannot be produced and placed into the TextureBufferQueue in time.

Consequently, display of consecutive frames of images is affected, and problems such as stuttering, frame dropping, and frame skipping occur.

In an example, that rendering time of the (N+2)^{th} frame of image is relatively long is used as an example.

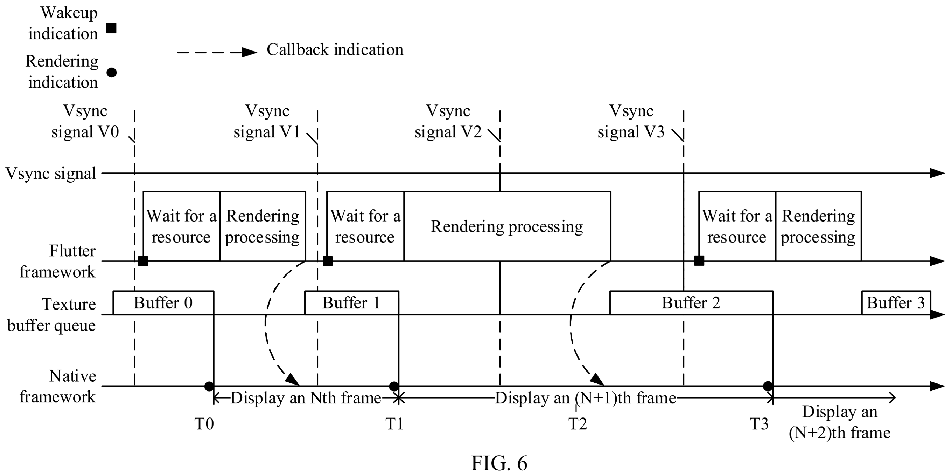

Referring to FIG. 6, the buffer 0 may be normally consumed at the moment T0, and the buffer 1 may be normally consumed at the moment T1. In this way, the electronic device may normally display the N^{th} frame of image between the moment T0 and the moment T1. The electronic device may display the (N+1)^{th} frame of image from the moment T1.

In this example, rendering time corresponding to the buffer 2 is relatively long, and consequently, production of the buffer 2 is not completed before the Vsync signal V2 arrives. In this way, before the Vsync signal V2 arrives, because production of a new buffer is not completed, the native framework does not receive the corresponding postTraversal callback, and the native framework does not trigger consumption of the new buffer based on arrival of the Vsync signal V2. As a result, switching to display the (N+2)^{th} frame of image, which should be performed at the moment T2, is not performed. Correspondingly, between the moment T2 and the moment T3, the electronic device can continue to display only the (N+1)^{th} frame corresponding to a previous frame.

In this example, production of the buffer 2 may be completed in the period between the Vsync signal V2 and the Vsync signal V3, so that when the Vsync signal V3 arrives, the native framework may have received the postTraversal callback. Therefore, at the moment T3 after the Vsync signal V3 arrives, the native framework may consume the buffer 2 to display the (N+2)^{th} frame of image.

In other words, in the example in FIG. 6, the electronic device always displays the (N+1)^{th} frame from the moment T1 to the moment T2 to the moment T3, and consequently, stuttering occurs.

To resolve the foregoing problem, embodiments of this application provides an image processing method, to flexibly adjust an occasion for waking up the flutter UI thread, so that the operation of producing a buffer by the flutter framework in S406 shown in FIG. 4B can be performed in advance. In this way, production of a new buffer can be effectively completed before a next Vysnc signal arrives, even if it takes a relatively long time to wait for a resource and/or rendering processing (that is, a drawing process). Further, after the next Vysnc signal arrives, the native framework can successively obtain a new buffer from the TextureBufferQueue, and send the buffer for display and consumption. This avoids a problem such as stuttering occurred because a buffer cannot be produced in time due to a reason shown in FIG. 6 or another reason.

The technical solutions provided in the embodiments of this application are described below in detail with reference to the accompanying drawings.

It should be noted that, the technical solutions provided in the embodiments of this application may be applied to an electronic device of a user. The electronic device may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device is not limited in the embodiments of this application.

In different embodiments of this application, the electronic device may have different components.

For example, from a perspective of hardware composition, an embodiment of this application provides an example of composition of an electronic device.

In this example, the electronic device may include a processor, an external memory interface, an internal memory, a universal serial bus (universal serial bus, USB) interface, a charging management module, a power management module, a battery, an antenna 1, an antenna 2, a mobile communication module, a wireless communication module, an audio module, a speaker, a receiver, a microphone, a headset jack, a sensor module, a button, a motor, an indicator, a camera module, a display screen, a subscriber identification module (subscriber identification module, SIM) card interface, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

In some implementations of this example, the processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The processor may generate an operation control signal based on instruction operation code and a timing signal, to complete control of instruction fetching and instruction execution.

A memory may be further disposed in the processor to store instructions and data. In some embodiments, the memory in the processor may be a cache. The memory may store instructions or data that has been used by the processor or that is used at a high frequency. If the processor needs to use the instructions or the data, the processor may directly invoke the instructions or the data from the memory. This avoids repeated access and reduces waiting time of the processor, thereby improving system efficiency.

The electronic device may implement a display function by using the GPU, the display screen, the application processor, and the like. The GPU is a microprocessor for image processing, and is connected to the display screen and the application processor. The GPU is configured to perform mathematical and geometric computing for graphics rendering. The processor may include one or more GPUs that execute program instructions to generate or change displayed information.

The display screen is configured to display an image, a video, and the like. The display screen includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include one or more display screens.

It may be understood that the foregoing is merely a schematic diagram of composition of the electronic device according to this application. In some other embodiments, the electronic device may also include other components.

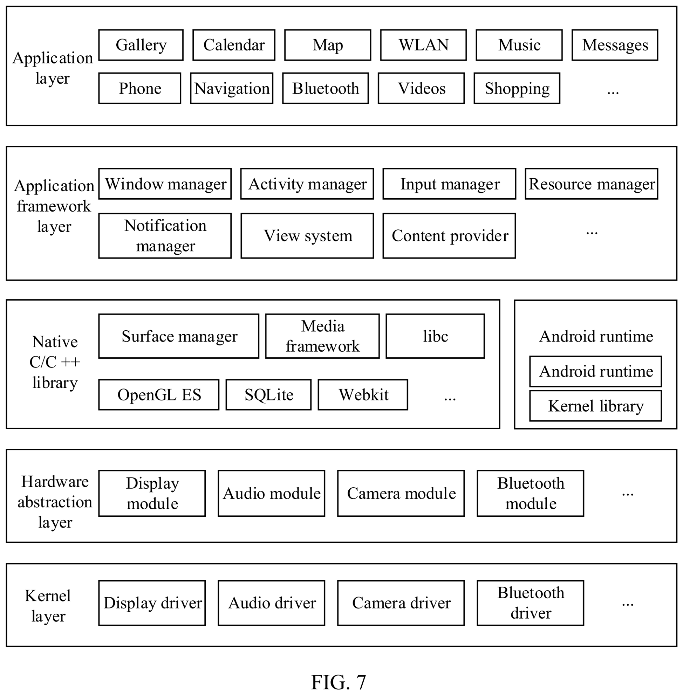

For example, FIG. 7 is a schematic diagram of software composition of an electronic device according to an embodiment of this application.

In this example, a software system of the electronic device may use a layered architecture, an event-driven architecture, a microkernel architecture, a microservice architecture, or a cloud architecture. In this embodiment of this application, an Android^{®} system with the layered architecture is used as an example to describe a software structure of the electronic device.

As shown in the example in FIG. 7, in the layered architecture of the electronic device, software is divided into several layers, and each layer has a clear role and task. The layers communicate with each other through software interfaces. In some embodiments, the Android system is divided into five layers from top to bottom: an application layer, an application framework layer, an Android runtime (Android runtime, ART) and a native C/C++ library, a hardware abstraction layer (hardware abstract layer, HAL), and a kernel layer.

The application program layer, that is, the Application layer, is referred to as an application layer for short. The layer may include a series of application packages.

As shown in FIG. 7, the application packages may include applications such as Camera, Gallery, Calendar, Phone, Map, Navigation, WLAN, Bluetooth, Music, Video, and Messages. In some embodiments, the application packages may further include a shopping application. Specifically, the shopping application may be at least one of common shopping applications such as Taobao^{®}, Jingdong^{®}, and Xianyu^{®}.

For example, a user uses the shopping application. The electronic device may receive a sliding operation of the user in a process of running the shopping application. Correspondingly, the electronic device may perform, based on the solution implementation shown in FIG. 4A to FIG. 4C, rendering of a new image and sending an existing image for display and consumption, thereby presenting a continuous page sliding effect to the user.

The application program framework layer, that is, the Application Framework layer, is referred to as a framework layer or a Framework layer for short. The layer may provide an application programming interface (application programming interface, API) and a programming framework for the applications at the application layer. The application framework layer includes some predefined functions.

As shown in FIG. 7, the application framework layer may include a window manager, a content provider, a view system, a resource manager, a notification manager, an activity manager, an input manager, and the like. The window manager provides a window manager service (Window Manager Service, WMS), and the WMS may be used for window management, window animation management, and surface management, and serve as a transfer station of an input system. The content provider is configured to store and obtain data, and enable the data to be accessible to an application. The data may include a video, an image, audio, calls that are made and answered, a browsing history and bookmarks, a phone book, and the like. The view system includes visual controls such as a text display control and a picture display control. The view system may be configured to build an application. A display interface may include one or more views. For example, a display interface including an SMS message notification icon may include a view for displaying a text and a view for displaying a picture. The resource manager provides various resources for an application, for example, a localized string, an icon, a picture, a layout file, and a video file. The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks. The activity manager may provide an activity manager service (Activity Manager Service, AMS), and the AMS may be used to start, switch, and schedule a system component (such as an activity, a service, a content provider, and a broadcast receiver), and manage and schedule an application process. The input manager may provide an input manager service (Input Manager Service, IMS), and the IMS may be used to manage system inputs, for example, a touchscreen input, a button input, and a sensor input. The IMS obtains an event from an input device node, and assigns the event to an appropriate window through interaction with the WMS.

In this example, the framework layer may be configured to support running of the rendering processing framework shown in FIG. 2. For example, the framework layer may include a main rendering module and a flutter rendering module. The main rendering module corresponds to a capability of a native framework, and may be configured to send a buffer for display and consumption by using a main drawing unit and a main rendering unit. The Flutter rendering unit corresponds to a capability of a flutter framework, and may be configured to produce a buffer by running a flutter drawing unit and a flutter rendering unit.

The main drawing unit may correspond to the main drawing thread shown in FIG. 4A. The main rendering unit may correspond to the main rendering thread M shown in FIG. 4A. The flutter drawing unit may correspond to the flutter UI thread shown in FIG. 4A. The Flutter rendering unit may correspond to the rendering thread F shown in FIG. 4A.

Based on the solutions provided in the embodiments of this application, the main rendering module may send a wakeup indication to the flutter rendering module in advance based on a preset policy, so that the flutter rendering module can still have sufficient time to produce a new buffer even when rendering time shown in FIG. 6 is relatively long, or time consumed for buffer production (that is, a drawing process) is relatively long due to another reason (for example, a resource cannot be obtained in time).

The Android runtime includes a kernel library and an Android runtime. The Android runtime is responsible for converting a source code into a machine code. The Android runtime mainly includes using an ahead of time (ahead or time, AOT) compilation technology and a just in time (just in time, JIT) compilation technology.

The kernel library is mainly configured to provide basic Java class library functions, for example, a basic data structure, mathematics, IO, a tool, a database, a network, and another library. The kernel library provides an API for a user to develop an Android application. The native C/C++ library may include a plurality of functional modules, for example, a surface manager (surface manager), a media framework (Media Framework), libc, OpenGL ES, SQLite, and a Webkit. The surface manager is configured to manage a display subsystem and provide fusion of 2D and 3D layers for a plurality of applications. The media framework supports playback and recording in a plurality of common audio and video formats, a still image file, and the like. The media library may support a plurality of audio and video encoding formats, such as MPEG4, H.264, MP3, AAC, AMR, JPG, and PNG. OpenGL ES provides drawing and operation of 2D and 3D graphics in an application. SQLite provides a lightweight relational database for an application of the electronic device 100.

The hardware abstraction layer runs in user space (user space), encapsulates a driver at the kernel layer, and provides an invoking interface to an upper layer. The kernel layer is a layer between hardware and software. The kernel layer includes at least a display driver, a camera driver, an audio driver, and a sensor driver.

FIG. 7 shows software division of an electronic device, which does not constitute an actual limitation on the electronic device.

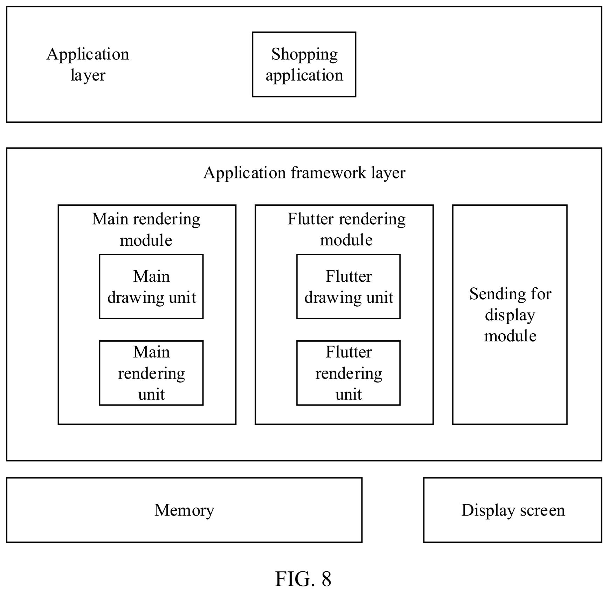

FIG. 8 is a schematic diagram of software composition of another electronic device according to an embodiment of this application.

As shown in FIG. 8, a shopping application may be configured at an application layer of the electronic device. A user may indicate the electronic device to run the shopping application. Correspondingly, the electronic device may display an interface of the shopping application to the user on a display screen.

It may be understood that, when the user wants to view more shopping interfaces, the user may input an indication in the interface of the shopping application. For example, the user may input a sliding operation in the interface of the shopping application to indicate the electronic device to perform sliding to update display.

For the process, refer to the description shown in FIG. 1A to FIG. 1C. Details are not described herein again.

In the example in FIG. 8, a plurality of modules may be configured at an application framework layer of the electronic device, and each module may further include a corresponding unit, configured to support the electronic device in performing, based on a sliding operation of the user, an operation of sliding to update display.

For example, the application framework layer may include a main rendering module, a flutter rendering module, and a sending for display module.

The main rendering module is configured to implement a capability of a native framework. For example, with reference to the description in FIG. 4A to FIG. 4C, a main drawing unit in the main rendering module may pull up a main drawing thread, and trigger, based on arrival of a Vysnc signal when receiving a postTraversal callback, sending of a buffer in a TextureBufferQueue for display and consumption.

For example, the main drawing unit may use a rendering indication to enable a main rendering unit to read an existing buffer from the TextureBufferQueue in a memory. The main rendering unit may further transmit the existing buffer to the sending for display module, so that the sending for display module updates display on the display screen based on the buffer.

The sending for display module may correspond to a surfaceflinger configured in the electronic device. After receiving the buffer that is sent by the main rendering module for display and consumption, the Surfaceflinger may dump data in the buffer into a buffer that is used for display through composition. The Surfaceflinger may further indicate the display screen to update display based on data in the buffer that is used for display through composition.

When receiving a postAnimation callback, the main drawing unit in the main rendering module may further trigger, based on arrival of a Vysnc signal, wakeup of the flutter rendering module to produce a new buffer.

A flutter drawing unit in the flutter rendering module may pull up a flutter UI thread, and indicate, when receiving a wakeup indication from the main drawing unit, a Flutter rendering unit to obtain a new buffer from the TextureBufferQueue based on the rendering thread F shown in FIG. 4A, and place a newly rendered frame of image into the buffer. The Flutter rendering unit may further place the buffer including the newly rendered frame of image into the TextureBufferQueue, to facilitate subsequent sending for display and consumption by the main rendering module. For example, the flutter rendering module may send the postTraversal callback to the main rendering module after producing a new buffer and placing the new buffer into the TextureBufferQueue, so that after a next Vsync signal arrives, the main rendering module continues to perform sending for display and consumption to update display.

In this embodiment of this application, a memory of the electronic device may include a TextureBufferQueue. The TextureBufferQueue may include one or more buffers.

For example, the TextureBufferQueue includes one buffer. After the main rendering module completes buffer consumption, the buffer in the TextureBufferQueue is empty. Correspondingly, after the flutter rendering module completes buffer production, a quantity of buffers in the TextureBufferQueue is 1. When the buffer in the TextureBufferQueue is not consumed, if the flutter rendering module completes production of a new buffer, because a quantity of buffers in the TextureBufferQueue is limited to 1, the new buffer may overwrite the existing buffer stored in the TextureBufferQueue.

For example, the TextureBufferQueue includes two buffers. When the TextureBufferQueue is empty, each time completing production of a buffer, the flutter rendering module place the buffer into a header of the TextureBufferQueue. If the buffer is not consumed, and the flutter rendering module completes production of a new buffer, the new buffer may be sequentially configured in the TextureBufferQueue. In other words, in this example, the TextureBufferQueue may include an earlier-produced buffer located in the header, and another subsequently produced buffer. In this way, when the main rendering module performs sending for display and consumption, the main rendering module may sequentially obtain the buffers in the TextureBufferQueue from the header, to send the earlier-produced buffer for display. After the buffer in the header is consumed, the buffer following the buffer may be advanced to the header of the TextureBufferQueue, so that after a next Vysnc signal arrives, the main rendering module may continue to consume the buffer in the header of the TextureBufferQueue.

In the following example, an example in which two buffers are configured in the TextureBufferQueue is used as an example. It may be understood that, when two buffers are configured in the TextureBufferQueue, there is no case in which a new buffer overwrites an earlier buffer in the foregoing description. Correspondingly, based on the foregoing solution implementation of obtaining the TextureBufferQueue from the header, a display problem of frame skipping such as frame dropping does not occur.

A solution in which a plurality of buffers are configured in the TextureBufferQueue is described in detail later.

In this example, to resolve a problem that exists in the scenario shown in FIG. 6 and in which display stuttering is caused by uncompletion of production of any buffer between two adjacent Vsync signals, embodiments of this application provide an image processing method. Based on the composition of the electronic device shown in FIG. 8, the main rendering module (or the main drawing unit in the main rendering module) can wake up the flutter rendering module in advance when determining that the postAnimation callback has been received. In this way, a buffer that has a relatively long resource waiting time and/or rendering processing time can start to be processed in advance, thereby significantly mitigating the display stuttering problem in the scenario shown in FIG. 6.

In the following description, each execution action of the native framework may be implemented by the main rendering module shown in FIG. 8. An operation of a main drawing thread in the native framework may be performed by the main drawing unit, and an operation of a rendering thread M in the native framework may be performed by the main rendering unit. Similarly, an operation of a flutter UI thread in a flutter framework may be performed by the flutter drawing unit, and an operation of a rendering thread F in the flutter framework may be performed by the flutter rendering unit.

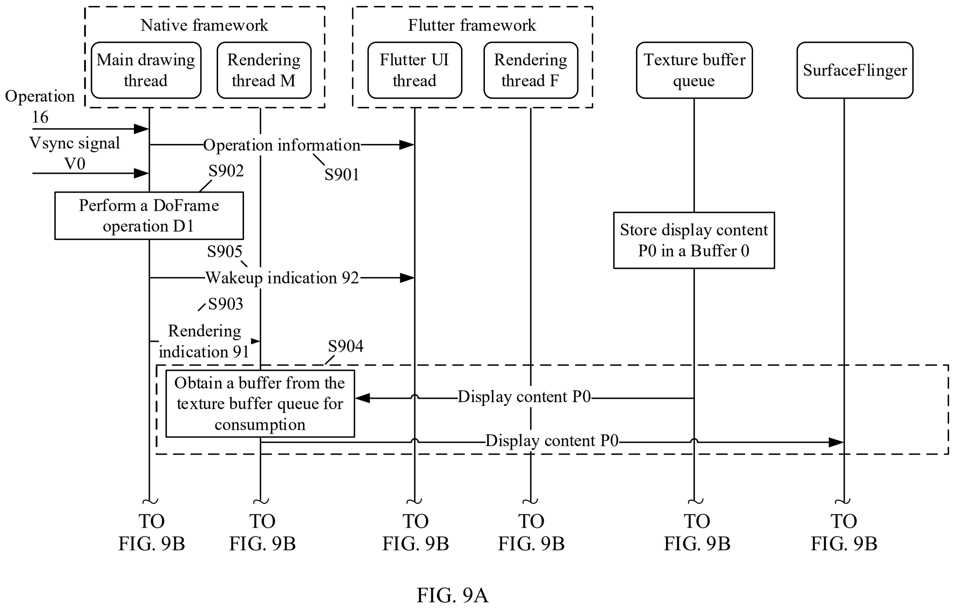

FIG. 9A to FIG. 9C are a schematic flowchart of an image processing method according to an embodiment of this application. The solution implementation shown in FIG. 9A to FIG. 9C are may be considered as an improvement of the existing procedure shown in FIG. 4A to FIG. 4C. A flutter framework is waken up in advance, so that a new buffer can start to be processed in advance, thereby avoiding display stuttering caused by an excessively long production time of a buffer.

As shown in FIG. 9A to FIG. 9C, the solution may include the following steps.

S901: A main drawing thread receives an operation 16 input by a user, and transparently transmits operation information to a flutter UI thread.

For implementation of the S901, refer to S401 in FIG. 4A.

In this example, the operation 16 may correspond to a sliding operation that is input by the user in an interface of a shopping application. In response to the operation 16, an electronic device may slide a current page to switch for display.

It may be understood that in the process of performing sliding to switch for display, the electronic device quickly switch between a plurality of consecutive frames of images for display. For example, each display frame may display a new frame of image. In this way, the electronic device generates a plurality of consecutive Vsync indications to trigger consumption of a buffer and production of a new buffer. In the scenario in which the frames of images need to be displayed consecutively and quickly, a stuttering case shown in FIG. 6 is prone to occur.

In the solution implementation shown in FIG. 9A to FIG. 9C, with reference to the description in FIG. 4A to FIG. 4C, the flutterUI thread may determine, based on a plurality of pieces of operation information transparently transmitted by the main drawing thread, that buffer production needs to be performed continuously, to support subsequent buffer production. In this case, a flutterUI thread may send the foregoing postAnimation callback to the main drawing thread before a next Vsync signal arrives. In a subsequent case in which a display interface needs to be further switched, the flutterUI thread may further send the foregoing postTraversal callback to the main drawing thread before a next Vsync signal arrives, to support switching to a next frame of image for display.

The solution example shown in FIG. 9A to FIG. 9C describes execution of the postAnimation callback and the postTraversal callback by using an example.

S902: The main drawing thread receives a Vsync signal V0, and triggers execution of a DoFrame operation D1.

For implementation of the S902, refer to S402 in FIG. 4A. The Vsync signal V0 may also be referred to as a first Vsync signal. Subsequently, a Vsync signal V1 may also be referred to as a second Vsync signal, and a Vsync signal V2 may also be referred to as a third Vsync signal.

The Vsync signal V0 may trigger switching a currently displayed (N-1)^{th} frame of image for display. For example, the Vsync signal V0 may trigger switching to display an N^{th} frame of image.

The Vsync signal V0 may further trigger production of a new buffer. For example, the Vsync signal V0 may trigger production of a buffer 1 of an (N+1)^{th} frame of image.

Correspondingly, the performing a DoFrame operation D1 may include: performing a Traversal method to send a buffer 0 corresponding to the N^{th} frame of image for display and consumption. Before performing the Traversal method, the main drawing thread has received the postTraversal callback. For details, refer to the following S903-S904.

The performing a DoFrame operation D1 may include: performing an Animation method to produce the buffer 1 corresponding to the (N+1)^{th} frame of image. Before performing the Animation method, the main drawing thread has received the postAnimation callback. For details, refer to the following S905-S906.

Similar to the foregoing description in FIG. 4A, in this example, the main drawing thread may send a wakeup indication 92 (for example, perform S905) before sending a rendering indication 91 (for example, performing S903). After a rendering thread M receives the rendering indication 91, and the flutterUI thread receives the wakeup indication 92, the two units may respectively perform corresponding operations asynchronously and independently. Descriptions are separately provided below.

S903: The main drawing thread delivers the rendering indication 91 to the rendering thread M.

For implementation of the S903, refer to S403 in FIG. 4A. The rendering indication 91 may correspond to the rendering indication 21 in S403.

For example, the rendering indication 91 may include a Draw command, which is used to indicate the rendering thread M to consume a current buffer.

It may be understood that before the Vsync signal V0 arrives, a TextureBufferQueue may include the produced buffer 0 corresponding to the N^{th} frame of image. In this way, the rendering indication 91 may be used to indicate the rendering thread M to send the buffer 0 for display and consumption.

S904: The rendering thread M obtains a buffer from the texture buffer queue (TextureBufferQueue) for consumption.

For implementation of the S904, refer to S404 in FIG. 4A.

For example, with reference to the example in FIG. 3, the rendering thread M may obtain, by using acquireBuffer(), the currently stored buffer 0 for consumption. For example, the rendering thread M may send a storage address of the obtained buffer 0 or display content P0 stored in the buffer 0 to a sending for display module (for example, a SurfaceFlinger). Correspondingly, the SurfaceFlinger may store the display content P0 in a display buffer used for display by a display screen. In this way, the SurfaceFlinger may perform related processing (for example, composition processing) on the display content P0 that enters the display buffer, and further update a display interface based on a processing result. Therefore, switching from the (N-1)^{th} frame of image to the N^{th} frame of image is implemented in a current display interface.

With reference to the descriptions in FIG. 3 and FIG. 4A to FIG. 4C, in some implementations, the rendering thread M may further release the consumed buffer 0 by using a releaseBuffer() function. In this way, before a new buffer is produced, a quantity of buffers in the TextureBufferQueue may be 0.

S905: The main drawing thread delivers the wakeup indication 92 to the flutter UI thread.

S906: The Flutter UI thread indicates a rendering thread F to draw a new frame of image, and store the new frame of image in the texture buffer queue. For example, the flutter UI thread may indicate, by using a drawing indication 93, the rendering thread F to produce a new buffer. Correspondingly, the rendering thread F may apply for a new buffer (such as the buffer 1) in the TextureBufferQueue, and render the (N+1)^{th} frame of image on the buffer 1. After display content P1 corresponding to the (N+1)^{th} frame of image is placed into the buffer 1, the buffer 1 is placed into the TextureBufferQueue.

For operations of the S905-S906, refer to S405-S406 shown in FIG. 4A and FIG. 4B. Details are not described herein again.

It may be understood that, through the foregoing S903-S906, the electronic device may complete consumption of the buffer 0 in the TextureBufferQueue and production of the buffer 1. A sequence of the two operations, that is, consumption of the buffer 0 and production of the buffer 1, is not limited.

It should be noted that in the existing solution, a quantity of buffers in the TextureBufferQueue is limited to be not greater than 1. Therefore, if production of the buffer 1 is completed before consumption of the buffer 0, the buffer 1 overwrites the buffer 0 in the TextureBufferQueue. As a result, the buffer 0 may be unable to be normally sent for display and consumption, and consequently, stuttering or frame skipping occurs corresponding to that the N^{th} frame of image cannot be sent for display.

Correspondingly, in this application, based on the foregoing description of the quantity of buffers in the TextureBufferQueue in the memory, the quantity of buffers may be 1 or more. For example, the quantity of buffers may be 2. In addition, this application further provides a consumption mechanism used when the quantity of buffers is greater than 1, that is, the buffers are sequentially taken out from a header to be sent for display and consumption. Therefore, even if production of the buffer 1 is completed before consumption of the buffer 0, the buffer 1 and the buffer 0 can be simultaneously stored in the TextureBufferQueue. The earlier-produced buffer 0 may be located in the header of the TextureBufferQueue, and correspondingly, the buffer 1 may be located after the buffer 0. In this way, when buffer consumption is performed, the buffer 0 can be preferentially taken out for sending for display and consumption. In other words, flexible sequential implementation of the foregoing two operations, that is, consumption of the buffer 0 and production of the buffer 1, is supported while avoiding a case in which the N^{th} frame of image cannot be sent for display.

In this way, due to flexible configuration of the quantity of buffers in the TextureBufferQueue, buffer consumption logic in a native framework may be relatively isolated from buffer production logic in a flutter framework, and a frame of image is not dropped due to different completion sequences.

In different implementations of this application, the quantity of buffers in the TextureBufferQueue is configured as 1 or 2 or another value, which may be flexibly determined by the electronic device based on a current rendering situation. For example, the electronic device may determine that consumption of a buffer is earlier than production of a new buffer in the first several Vysnc periods of a current application. In this way, the electronic device may configure the quantity of buffers in the TextureBufferQueue as 1, thereby saving storage space overheads for configuring a plurality of buffers. For another example, the electronic device may have a case in which consumption of a buffer is later than production of a buffer in the first several Vysnc periods of a current application. In this way, the electronic device may configure the quantity of buffers in the TextureBufferQueue as 2 or a larger value, thereby ensuring that no frame image is dropped. For another example, the electronic device may configure, by default, at least two buffers for the TextureBufferQueue. In this way, after production of a new buffer is completed in a current Vysnc period, the new buffer may not overwrite an existing unconsumed buffer and is stored in the TextureBufferQueue together with the existing unconsumed buffer. In this application, the Vysnc period may be a time period between two adjacent Vsync signals. For example, there may be a corresponding Vysnc period (for example, referred to as a Vsync period 0-1, or referred to as a first Vsync period) between the Vsync signal V0 and the Vsync signal V1. For another example, there may be a corresponding Vysnc period (for example, referred to as a Vsync period 1-2) between the Vsync signal V1 and the Vsync signal V2.

In the following example, an example in which two buffers are configured in the TextureBufferQueue is used as an example. The two buffers may respectively correspond to a first buffer and a second buffer. A position of the first buffer in the TextureBufferQueue precede a position of the second buffer. For example, the first buffer may be located in the header of the TextureBufferQueue, and the second buffer may be located after the first buffer (for example, a tail) of the TextureBufferQueue.

The Vsync period 0-1 is used as an example. Before buffer consumption, the first buffer may store the buffer 0, and the second buffer is empty. In this case, in the Vsync period 0-1, the native framework may obtain the buffer 0 in the first buffer to send the buffer 0 for display and consumption. After the buffer 0 is sent for display and consumption, both the first buffer and the second buffer in the TextureBufferQueue are empty. Correspondingly, in the Vsync period 0-1, after production of a new buffer (buffer 1) is completed, the flutter framework may place the buffer 1 into the first buffer, and send the postTraversal callback to the native framework, so that the buffer 1 in the first buffer is consumed in a next Vysnc period.

It may be understood that, in the example in FIG. 9A to FIG. 9C, an example in which consumption of the buffer 0 is earlier than production of the buffer 1 is used as an example. After the buffer 0 is consumed, both the first buffer and the second buffer are empty. After the buffer 1 is produced, the first buffer corresponds to the buffer 1, and the display content P1 may be stored in the first buffer. The second buffer is still empty.

In some other implementations, in the Vsync period 0-1, production of the buffer 1 may be earlier than consumption of the buffer 0. Therefore, before the buffer 1 is produced, the first buffer may store the buffer 0, and the second buffer may be empty. After the buffer 1 is produced, the buffer 0 may be stored in the first buffer, and the buffer 1 may be stored in the second buffer. In this way, when buffer consumption is performed in the Vsync period 0-1, the native framework may obtain the buffer 0 from the first buffer in the header to perform consumption. After consumption of the buffer 0 is completed, the buffer 1 may enter the first buffer, and correspondingly, the second buffer is releases and empty.

In the example in FIG. 9A to FIG. 9C, after production of the buffer 1 is completed, the flutter framework may make a corresponding callback to the native framework to facilitate successful subsequent production and consumption.

For example, as shown in S907, the flutter UI thread may send a postTraversal callback CB1 and a postAnimation callback CB2 to the main drawing thread.

In some embodiments, the main drawing thread may store received callback information in a callback queue, for example, store the postTraversal callback CB1 and the postAnimation callback CB2 in the callback queue. The postTraversal callback CB1 and the postAnimation callback CB2 may respectively identified with flutters, to indicate that the two callbacks are from the flutter framework. In an example, the main drawing thread may identify types of the postTraversal callback CB1 and the postAnimation callback CB2 as flutter types.

In this way, before performing DoFrame subsequently, the main drawing thread may view the callback queue, and when the callback queue includes the postTraversal callback of the flutter type, the main drawing thread performs the Traversal method to perform buffer consumption. In addition, before performing DoFrame subsequently, the main drawing thread may view the callback queue, and when the callback queue includes the postAnimation callback of the flutter type, the main drawing thread performs the Animation method to wake up the flutter framework to perform buffer production.

It may be understood that, after performing the Traversal method, the main drawing thread may further delete the postTraversal callback from the callback queue, so that a same postTraversal callback does not trigger the Traversal method a plurality of times to perform buffer consumption. Similarly, after performing the Animation method, the main drawing thread may further delete the postAnimation callback from the callback queue, so that a same postAnimation callback does not trigger the Animation methods a plurality of times to wake up the flutter framework to perform buffer production.

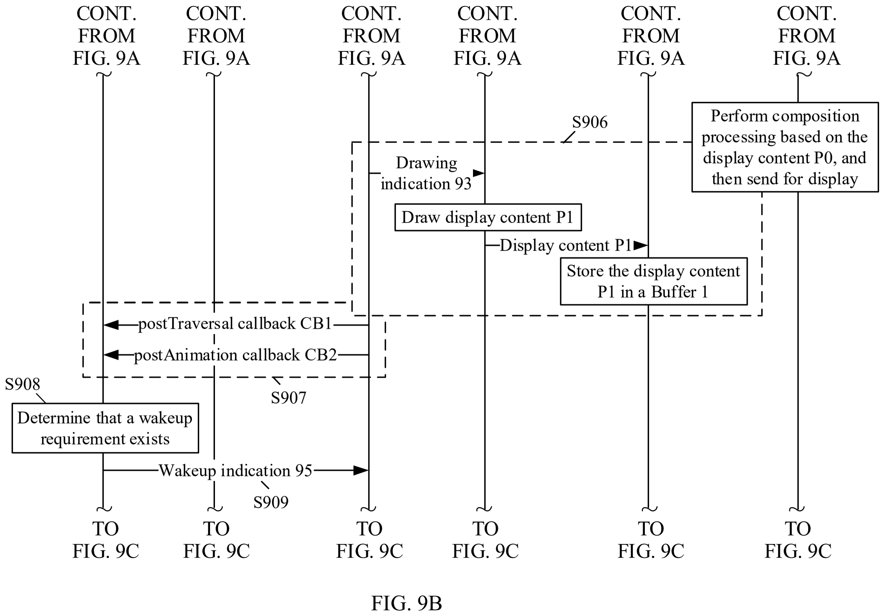

Therefore, through S901-S907 shown in FIG. 9A and FIG. 9B, the electronic device may complete sending the N^{th} frame of image for display and consumption and production of the (N+1)^{th} frame of image in the Vsync period 0-1.

As shown in FIG. 9A and FIG. 9B, in the Vsync period 0-1, the native framework may further initiate execution of production of more new buffers. With reference to the descriptions in S905-S906, the flutter framework may produce the buffer 1 after being waken up by the native framework. Then, in the Vsync period 0-1, the native framework may further wake up the flutter framework to perform subsequent production of a buffer 2. The buffer 2 may be a buffer that stores display content P2, and the display content P2 corresponds to an (N+2)^{th} frame of image.

In this way, the buffer 2 is produced in the Vsync period 0-1, so that when production of the buffer 2 takes a relatively long time (for example, a runnable process and/or a running process of the buffer 2 take/takes a relatively long time), the buffer 2 can also be produced and placed into the TextureBufferQueue before the buffer 2 subsequently needs to be sent for display and consumption.

In an example, as shown in FIG. 9B, after S907, the method further includes the following steps.

S908: The main drawing thread determines that a wakeup requirement exists.

For example, the main drawing thread may view the callback queue, and determines, when a postAnimation callback of a flutter type exists in the callback queue, that a wakeup requirement exists.

It may be understood that, with reference to the foregoing description of the postAnimation callback, the flutter framework may register the postAnimation callback with the native framework when determining that a subsequent image needs to be rendered.

For example, in S907, the flutter framework may register the postAnimation callback CB2 with the native framework when determining that a subsequent image (for example, the (N+2)^{th} frame of image corresponding to the new buffer 2 exists after the produced buffer 1) needs to be rendered.

Correspondingly, the postAnimation callback CB2 may be placed into the callback queue, and a type of the postAnimation callback CB2 may be a flutter type.

In this case, in the S908, the main drawing thread may view the callback queue after producing the buffer 1 and placing the buffer 1 into the queue (that is, into the TextureBufferQueue). The main drawing thread may determine that the callback queue includes the postAnimation callback CB2 of the flutter type, and therefore, determine that a requirement for drawing a subsequent new frame of image exists. Drawing of the new image may be implemented based on wakeup of the flutter framework. Therefore, when determining that the callback queue includes the postAnimation callback CB2 of the flutter type, the main drawing thread may determine that there is a wakeup requirement.

S909: The main drawing thread sends a wakeup indication 95 to the flutter UI thread.

The wakeup indication 95 may be used to wake up the flutter framework again in the Vsync period 0-1 to produce a new buffer.

It may be understood that, through execution of S908-S909, the main drawing thread may send the wakeup indication 95 to the flutter UI thread in advance, to advance production of the buffer 2 corresponding to the wakeup indication 95 to the Vsync period 0-1.

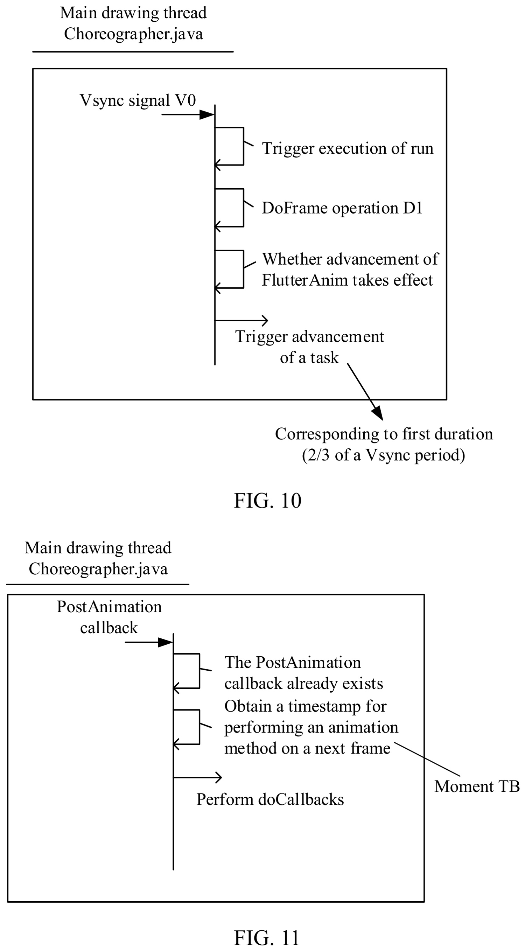

In a specific implementation, FIG. 10-FIG. 12 provide specific execution logic of S908-S909. This solution may be used to send a delay task when the Vsync signal V0 arrives, so that S908-S909 starts to be executed after S901-S907.

As shown in FIG. 10, after the Vsync signal V0 arrives, the main drawing thread may start to perform a corresponding operation, for example, trigger execution of run. Next, the main drawing thread may perform the DoFrame operation D1. The process may correspond to the implementation in the foregoing S901-S907. In the example in FIG. 10, the main drawing thread may further determine whether advancement of FlutterAnim takes effect.

The following describes an example for determining whether advancement of FlutterAnim takes effect.

In this example, the condition for determining whether advancement of FlutterAnim takes effect may further include at least one of the following: a current thread is a main thread; an action of releasing a finger from a sliding operation is received; currently in non-multi-window display; and a current application uses a single textureview.

For example, the condition for determining whether advancement of FlutterAnim takes effect includes that a current thread is a main thread.

When the current thread is the main thread, it is determined that advancement of FlutterAnim takes effect. On the contrary, if the current thread is not the main thread, it is determined that advancement of FlutterAnim does not take effect.

For example, the condition for determining whether advancement of FlutterAnim takes effect includes that an action of releasing a finger from a sliding operation is received.

When the action of releasing a finger from a sliding operation is not received and currently in a sliding operation process, it is determined that advancement of FlutterAnim takes effect. On the contrary, if the action of releasing a finger from a sliding operation has been received, it is determined that advancement of FlutterAnim does not take effect.

For example, the condition for determining whether advancement of FlutterAnim takes effect includes currently in non-multi-window display.

Multi-window display corresponds to simultaneous occurrence of two or more Draw instructions for window rendering, and this case may occur when a user inputs window switching. Therefore, in this example, when currently in non-multi-window display, it is determined that advancement of FlutterAnim takes effect.

For example, the condition for determining whether advancement of FlutterAnim takes effect includes that a current application uses a single textureview.

The single textureview corresponds to rendering processing performed by using the flutter framework. Therefore, when a type of a currently used View is a flutter textureView, it is determined that advancement of FlutterAnim takes effect.

The foregoing example provides a plurality of solutions for determining whether advancement of FlutterAnim takes effect. In some other embodiments, two or more of the plurality of solutions may be used simultaneously. When each condition determines that advancement of FlutterAnim takes effect, it is considered that a buffer can be produced in advance in a current scenario, and generation of a delay task is triggered.

In this application, the delay task may correspond to first duration. In some embodiments, the first duration may be 2/3 of the Vsync period 0-1. In other words, after receiving the Vsync signal V0, the main drawing thread may configure the delay task. Duration of the delay task may be 2/3 of the Vsync period 0-1. In this way, after the delay task ends, the main drawing thread may start to perform a related action.

Referring to FIG. 11, when the delay task corresponding to the first duration ends, the main drawing thread may detect whether a current callback queue includes a PostAnimation callback. Before the first duration ends, the electronic device may complete production of the buffer 1, and perform S907. Therefore, the callback queue may include the postTraversal callback CB1. In this way, it can be determined that the animation method needs to be performed in advance.

As shown in FIG. 11, when it is determined that the PostAnimation callback already exists after the first duration after the Vsync signal V0, the main drawing thread may obtain a corresponding timestamp for performing the animation method on a next frame. For example, the timestamp may be the timestamp carried in the wakeup indication 25 in FIG. 4B. For example, the timestamp is a moment TB.

In this way, the main drawing thread may perform doCallbacks based on the moment TB corresponding to the determined timestamp.

For example, the main drawing thread may perform the doCallbacks at a first moment. The first moment may be a moment TB-delta. Delta may be preset second duration. Because the first moment is advanced by delta based on the moment TB, execution of the animation method in the doCallbacks is advanced by the delta duration. Therefore, processing of the buffer 2 is advanced by the second duration.

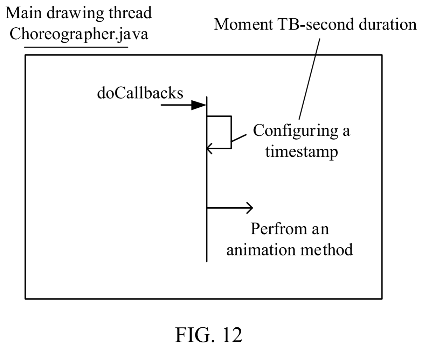

In an example, as shown in FIG. 12, the main drawing thread may configure, based on the moment TB, a current timestamp at which the animation method to be performed. Therefore, the animation method can be performed before the preset second duration.

Specifically, corresponding to the example in FIG. 9A to FIG. 9C, after processing is advanced by the second duration, the flutter framework may trigger execution of the following S910.

S910: The Flutter UI thread indicates the rendering thread F to draw a new frame of image, and store the new frame of image in the texture buffer queue.

With reference to the description in S909, the flutter UI thread may receive the wakeup indication 95 that carries a timestamp (TA-delta). Therefore, the flutter UI thread may send a drawing indication 96 to the rendering thread F after the duration (TA-delta).

The rendering thread F may obtain the new buffer 2 from the TextureBufferQueue based on rendering information that corresponds to the (N+2)^{th} frame of image and that is carried in the drawing indication 96, and draw, on the buffer 2, the display content P2 corresponding to the (N+2)^{th} frame of image. After the drawing is completed, the flutter framework may place the buffer 2 including the display content P2 into the TextureBufferQueue.

With reference to the foregoing description of setting the first buffer and the second buffer in the TextureBufferQueue, in this example, the first buffer may store the buffer 1 that has been produced but not consumed, and the produced buffer 2 may be stored in the second buffer.

In the example in FIG. 9A to FIG. 9C, production of the buffer 2 may be completed before the Vsync signal V1 arrives. In some other embodiments, production of the buffer 2 may alternatively be completed after the Vsync signal V1 arrives. It may be understood that, because production of the buffer 2 is advanced, the buffer 2 can be normally sent for display and consumption as long as the buffer 2 enters the TextureBufferQueue before the VsyncV2 arrives.

S911: The flutter UI thread sends a callback to the main drawing thread.

Similar to the foregoing description in S907, after production of the buffer 2 is completed, the flutter framework may register a callback with the main drawing thread, so that the buffer 2 can be subsequently consumed and a new buffer can be produced.

For example, the postTraversal callback CB3 may be used to register consumption of the buffer 2. For another example, the postAnimation callback CB4 may be used to register production of a buffer 3.

It should be noted that in the example in FIG. 9A to FIG. 9C, production of the buffer 2 and the buffer 1 may be completed in a same Vsync period 0-1. Correspondingly, this application provides a TextureBufferQueue configured with two buffers to separately store the buffer 1 and the buffer 2, to avoid frame dropping caused by the buffer 2 overwriting the buffer 1.

In addition, callback registration in the S911 and S907 may also be performed in a same Vsync period 0-1.

In this application, the flutter framework may encapsulate a callback before performing S911, to prevent two postTraversal callbacks or two postAnimation callbacks from occurring in a same Vsync period.

For example, the flutter framework may encapsulate the postTraversal callback CB3 and the postAnimation callback CB4 into callbacks of other types different from the flutter type. Therefore, after the Vsync signal V1 arrives, the main drawing thread does not directly consume the buffer 2 based on the postTraversal callback CB3, or produce the buffer 3 based on the postAnimation callback CB4.

In some implementations, the encapsulated postTraversal callback CB3 and postAnimation callback CB4 may have a delay attribute. The delay attribute corresponds to duration of a Vsync period. After the delay attribute ends, types of the postTraversal callback CB3 and the postAnimation callback CB4 automatically changes to the flutter type.

In this way, in the Vsync period 0-1, the main drawing thread may receive the postTraversal callback CB1 of the flutter type. Therefore, in a next period (for example, the Vsync period 1-2), the main drawing thread may send the buffer 1 for display and consumption based on the postTraversal callback CB1.

In addition, in the Vsync period 0-1, the main drawing thread may further receive the encapsulated postTraversal callback CB3 and postAnimation callback CB4. Because the types of the postTraversal callback CB3 and the postAnimation callback CB4 are not the flutter type, the main drawing thread does not trigger a corresponding Traversal method or Animation method after the Vsync signal V1 arrives.

After duration of a Vsync period after the encapsulated postTraversal callback CB3 and postAnimation callback CB4 are received, the types of the postTraversal callback CB3 and the postAnimation callback CB4 may change to the flutter type. In this way, it is equivalent to that in the Vsync period 1-2, the main drawing thread receives the postTraversal callback CB3 and the postAnimation callback CB4 that are of the flutter type. Therefore, when the next Vsync signal V2 arrives, the main drawing thread may consume the buffer 2 based on the postTraversal callback CB3, and wake up the flutter framework based on the postAnimation callback CB4 to produce the buffer 3.

It may be understood that, in the foregoing example in FIG. 9A to FIG. 9C, an example in which the flutter framework encapsulates the postTraversal callback CB3 and the postAnimation callback CB4 and then send the encapsulated postTraversal callback CB3 and postAnimation callback CB4 is used.

In some other embodiments, the encapsulation operation may also be performed by the main drawing thread.

For example, the flutter framework may directly register the postTraversal callback CB3 and the postAnimation callback CB4 with the main drawing thread based on an existing solution. Correspondingly, the main drawing thread may view the current callback queue after receiving the postTraversal callback CB3 and the postAnimation callback CB4. When determining that the postTraversal callback CB1 is not responded, the main drawing thread may actively encapsulate the postTraversal callback CB3 and the postAnimation callback CB4, so that the types of the postTraversal callback CB3 and the postAnimation callback CB4 automatically change to the flutter type after duration of a Vsync period, and a corresponding response is made after the next Vsync signal V2 arrives.

In this way, production of the buffer 2 is advanced through S908-S911 in the Vsync period 0-1, thereby avoiding a problem that the buffer 2 cannot be normally sent for display in a Vsync period 2-3 when production of the buffer 2 cannot be completed in time in the Vsync period 1-2.

It may be understood that, after the foregoing operation in the Vsync period 0-1 is completed, the electronic device may consume the (N+1)^{th} frame of image based on arrival of a next Vsync signal V1. For example, the method further includes the following S912-S914.

S912: The main drawing thread performs a DoFrame operation D2.

The main drawing thread may trigger execution of DoFrameD2 after the Vsync signal V1 arrives.

Similar to the foregoing description of the DoFrame operation D1, the main drawing thread may determine that the callback queue includes the postTraversal callback CB1. Correspondingly, the DoFrame operation D2 may include a response to the postTraversal callback CB1.

In other words, the buffer in the first buffer in the current TextureBufferQueue is consumed. The first buffer may store the display content P1 corresponding to the buffer 1, which corresponds to the (N+1)^{th} frame of image.

S913: The main drawing thread sends a rendering indication 94 to the rendering thread M. The rendering indication 94 is used to indicate the rendering thread M to consume the buffer in the TextureBufferQueue.

S914: The rendering thread M obtains a buffer from the texture buffer queue for consumption.

Specifically, the rendering thread M may obtain, from the TextureBufferQueue, content in the buffer (for example, the first buffer) stored in the header, and consume the content. The first buffer may store the display content P1.

After obtaining the display content P1, the rendering thread M transmits the display content P1 to the surfaceflinger, so that the surfaceflinger displays the (N+1)^{th} frame on the display screen based on the display content P1.

It may be understood that, after the Vsync signal V1 arrives, based on the existing solution (as shown in FIG. 4B and FIG. 4C), the main drawing thread may wake up the flutter framework to produce the buffer 2.

In this example, through S908-S910, the buffer 2 have been produced and placed into the TextureBufferQueue in the Vsync period 0-1. Therefore, in the Vsync period 1-2, the buffer 2 does not need to be produced and processed again.

In this way, based on the foregoing descriptions of FIG. 9A to FIG. 9C-FIG. 12, in the solution provided in this embodiment of this application, when determining that a wakeup requirement exists, the main drawing thread can advance, by using the determining mechanism shown in FIG. 10-FIG. 12, an animation method triggered after a next Vsync signal arrives to a current Vsync period, thereby quickly produce a subsequent buffer. This avoids a failure of subsequent sending for display and consumption due to an excessive long buffer production time, thereby resolving a corresponding display stuttering problem.

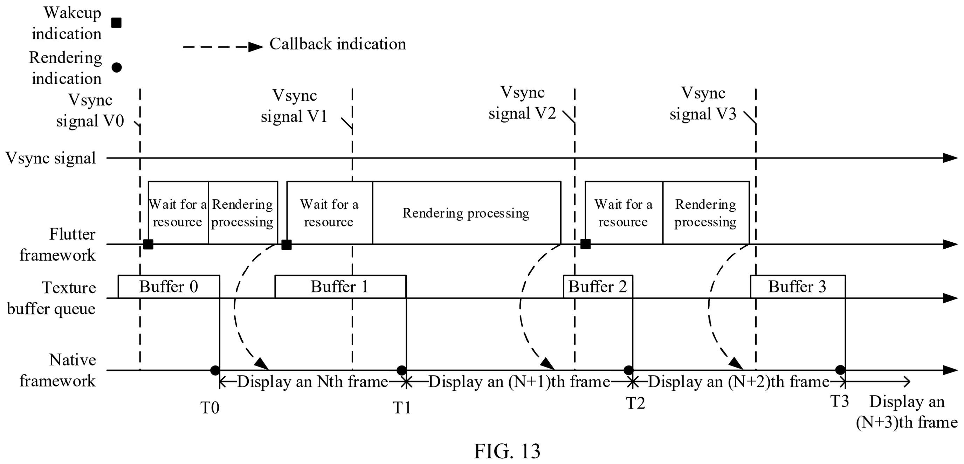

In an example, FIG. 13 provides an example of a timing sequence of consuming and producing a buffer when the solution in this application is performed. In the example in FIG. 13, the problem scenario background shown in FIG. 6 is used, and the solution shown in FIG. 9A to FIG. 9C is used to resolve the problem in FIG. 6 that the (N+1)^{th} frame of image cannot be normally displayed between the moment T2 and the moment T3 when production of the buffer 2 cannot be completed in time.

For example, as shown in FIG. 13, after the Vsync signal V0 arrives, the flutter framework may wait for a resource and rendering processing based on the wakeup indication to produce the buffer 1 and place the buffer 1 into the TextureBufferQueue. In the example in FIG. 13, the example in which the first buffer and the second buffer are configured in the TextureBufferQueue is still used. The buffer 1 may be placed into the first buffer in the TextureBufferQueue. Based on the solution implementation shown in FIG. 9A to FIG. 9C, after the Vsync signal V0 arrives, the electronic device may determine that advancement of DoAnimation processing needs to be triggered. In this way, before the Vsync signal V1 arrives, the electronic device may wake up the flutter framework again to draw and process a new buffer (for example, the buffer 2). At 2/3 of the Vsync period 0-1, the electronic device may start to perform DoAnimation processing corresponding to the buffer 2.

In this way, DoAnimation processing corresponding to the buffer 2 can be advanced. As shown in FIG. 13, drawing and processing of the buffer 2 are advanced, so that production of the buffer 2 can be completed and the buffer can enter the TextureBufferQueue before the Vsync signal V2 arrives. Therefore, after the Vsync signal V2 arrives, the electronic device can successfully consume the buffer to switch to display the (N+2)^{th} frame of image at the moment T2, thereby avoiding a case that is shown in FIG. 6 and in which the buffer 2 cannot be produced in time due to a relatively long drawing process, which affects normal sending for display, and correspondingly avoids a display stuttering problem caused due to the problem.

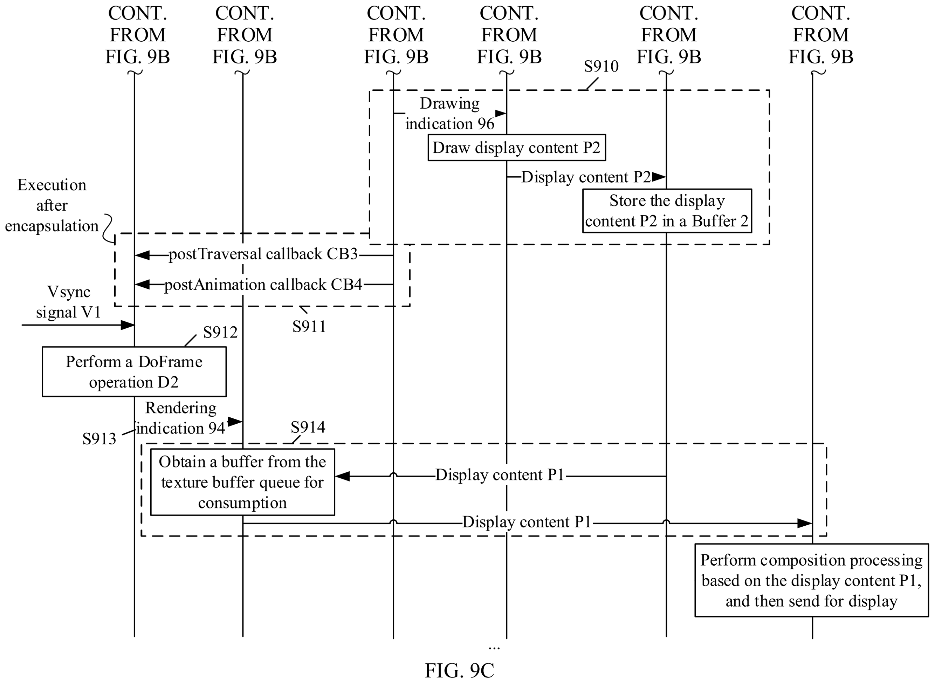

In addition, with reference to the description of S911 in FIG. 9C, to prevent two postAnimation callbacks from occurring in a same Vsync period, the main drawing thread may actively perform encapsulation processing on a plurality of received callback indications.

In this embodiment of this application, in a specific execution process of S911, the main drawing thread may perform a corresponding callback encapsulation operation based on a preset first encapsulation interval and a preset second encapsulation interval, and temporarily encapsulate the flutter type as another type. This avoids a sending for display problem caused by two or more postAnimation callbacks occurring in a same Vsync period.

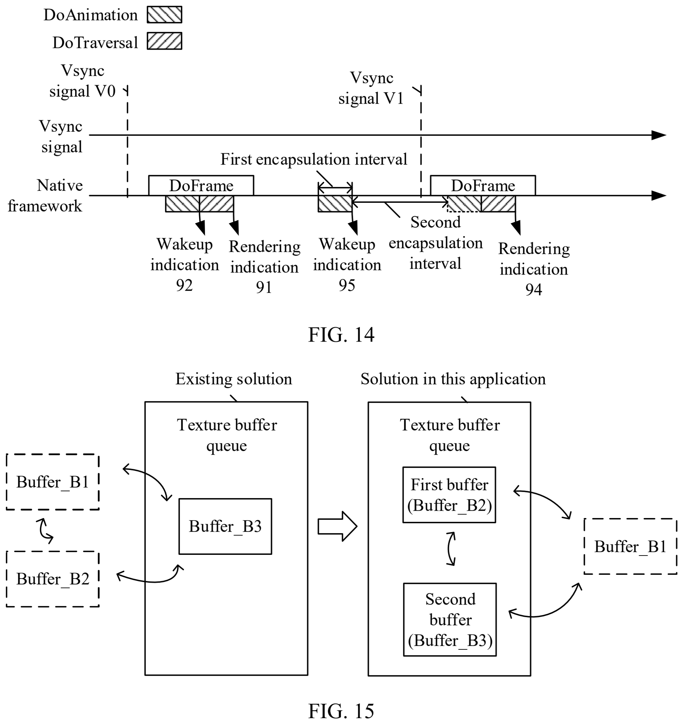

In an example, referring to FIG. 14, an encapsulation mechanism provided in this application is described with reference to the timing sequence logic in FIG. 13.

With reference to the foregoing description of the native framework (for example, the main drawing thread in the native framework), after a new Vsync signal is sent, DoFrame may be performed.

For example, the DoFrame operation may include traversing a received callback in the callback queue.

The Vsync period 0-1 is used as an example. Before the Vsync signal V0 arrives, the postAnimation callback and the postTraversal callback have entered the callback queue.

Therefore, as shown in FIG. 14, after the Vsync signal V0 arrives, the main drawing thread of the native framework may perform DoFrame. When traversing the postAnimation callback, the main drawing thread may perform DoAnimation, and correspondingly perform the animation method configured in the postAnimation callback, thereby generating and delivering the wakeup indication 92.

Similarly, when traversing the postTraversal callback, the main drawing thread may perform DoTraversal, and correspondingly perform the Traversal method configured in the postTraversal callback, thereby generating and delivering the rendering indication 91.

Based on the existing solution, the wakeup indication 95 that is used to wake up the flutter framework to draw a next frame (for example, the (N+2)^{th} frame) should be delivered in the Vsync period 1-2. As a result, stuttering may occur due to a relatively long time for rendering the (N+2)^{th} frame of image.

Based on the solution implementation shown in FIG. 9A to FIG. 9C, delivery of the wakeup indication 95 may be advanced to the Vysnc period 0-1, to advance processing of the (N+2)^{th} frame of image.

In a specific execution process, as shown in FIG. 14, in the Vsync period 0-1, after the main drawing thread performs the DoFrame operation in the existing solution, before the Vsync signal V1 arrives, the main drawing thread may perform DoAnimation again, to correspondingly generate and deliver the wakeup indication 95, thereby performing S909 in FIG. 9B.

In this example, to prevent the main drawing thread from receiving a plurality of postAnimation callbacks in a same Vsync period, the main drawing thread may perform encapsulation processing on callbacks received in the first encapsulation interval and the second encapsulation interval shown in FIG. 14.

The encapsulation processing on the callback may include: packaging an encapsulated callback, where a type of a packaged callback instruction may be different from a return instruction before packaging. For example, the encapsulated callback is of a flutter type. Then, after the encapsulation processing, the type of the encapsulated callback may be different from the flutter type.

In some implementations, the encapsulation processing may further include: configuring a delay mechanism for an encapsulated callback instruction. The delay mechanism is configured to decapsulate the encapsulated callback instruction after specific duration. A type of the decapsulated callback instruction is the same as that of the callback instruction before the encapsulation processing. For example, a type of the encapsulated callback instruction is the flutter type before the encapsulation processing. Then, after the encapsulation processing, the type of the encapsulated callback instruction is different from the flutter type. However, after the decapsulation processing, the type of the encapsulated callback instruction is the flutter type. In some implementations, duration corresponding to the delay mechanism may be duration of one Sync period. In this way, after one Sync period, the main drawing thread can normally respond to the callback instruction.

In a specific implementation, in the example in FIG. 14, a start moment of the first encapsulation interval may correspond to a moment at which the main drawing thread starts to perform DoAnimation for the second time in any Vsync period (for example, the Vsync period 0-1). Correspondingly, an end moment of the first encapsulation interval may correspond to an end moment at which the main drawing thread performs DoAnimation for the second time in any Vsync period (for example, the Vsync period 0-1), that is, a moment at which the main drawing thread generates and sends a wakeup indication (for example, the wakeup indication 95). Correspondingly, the main drawing thread may perform encapsulation processing on all types of postanimation callbacks in the first encapsulation interval.

A start moment of the second encapsulation interval may be the same as the end moment of the first encapsulation interval. For example, the start moment of the second encapsulation interval may correspond to the end moment at which the main drawing thread performs DoAnimation for the second time in any Vsync period (for example, the Vsync period 0-1), that is, the moment at which the main drawing thread generates and sends the wakeup indication (for example, the wakeup indication 95). Correspondingly, the main drawing thread may perform encapsulation processing on a callback (that is, the postanimation callback sent by the flutter framework) of the flutter type in the second encapsulation interval.

Therefore, through the solution shown in FIG. 14, the postAnimation callback can be accurately encapsulated. It may be understood that in some scenarios, a main rendering thread may further encapsulate the postTraversal callback based on a similar solution, and a specific implementation is not described again.

It should be noted that with reference to the effect examples in FIG. 9A to FIG. 9C and FIG. 14, in some embodiments of this application, the TextureBufferQueue may include two or more buffers. For example, in the foregoing example, an example in which the TextureBufferQueue includes the first buffer and the second buffer is used.

As shown in FIG. 15, reference is made to the description of the existing solution in FIG. 4A to FIG. 4C.

In the current solution implementation, a length of the TextureBufferQueue may be one buffer, that is, data of one buffer may be simultaneously stored in the TextureBufferQueue. For example, the electronic device is configured with three buffers to buffer data. The three buffers may be a Buffer_B1, a Buffer_B2, and a Buffer_B3. In this case, data of one of the three buffers may be simultaneously stored in the TextureBufferQueue. When data of another buffer arrives, buffer data in the TextureBufferQueue is discarded, and the data of the new buffer is stored in the TextureBufferQueue. For example, as shown in FIG. 15, data of the Buffer_B3 may be stored in the current TextureBufferQueue. When data of the Buffer_B1 arrives, the TextureBufferQueue can discard the data of the Buffer_B3 and store the data of the Buffer_B1.

Correspondingly, in the TextureBufferQueue configuration provided in this embodiment of this application, the length of the TextureBufferQueue may be two or more buffers. For example, the length of TextureBufferQueue may be two buffers. In this way, data of two buffers may be simultaneously in the TextureBufferQueue.

For example, as shown in FIG. 15, data of the Buffer_B2 may be stored in the first buffer, and the data of the Buffer_B3 may be stored in the second buffer. In this way, when the data of the Buffer_ B3 is not consumed, if the data of the new Buffer_B2 arrives, the data of the Buffer_ B3 is not discarded. Therefore, in next buffer consumption, frame dropping still does not occur in the data of the Buffer_B3, to implement normal sending for display and consumption.

In this application, with reference to the description of S910, the foregoing problem is resolved by configuring the first buffer and the second buffer, so that a newly produced buffer does not overwrite an existing buffer. This avoids frame dropping due to buffer overwriting. In this way, after the Vsync signal V1 arrives, the native framework may consume the buffer 1 in the first buffer, and correctly display the (N+1)^{th} frame of image.

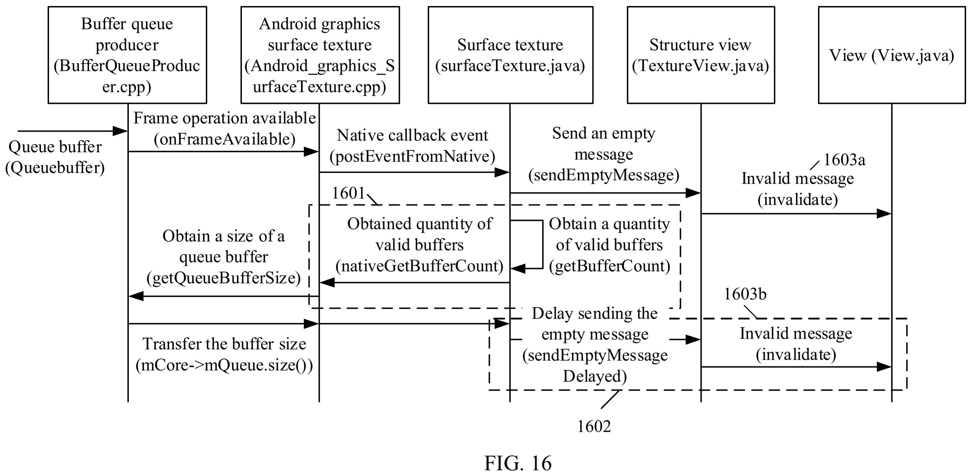

In this embodiment of this application, referring to FIG. 16, based on a manner of setting a plurality of buffers in the TextureBufferQueue, a command management and control mechanism corresponding to the plurality of buffers is further provided, so that each buffer can be successfully consumed and produced when a plurality of buffers exist in the TextureBufferQueue.

As shown in FIG. 16, the process of managing and controlling the buffer may relate to a plurality of software modules. The plurality of software modules or units (for example, a buffer queue producer (BufferQueueProducer.cppp), an Android graphics surface texture (Android_graphics_SurfaceTexture.cpp), a surface texture (surfaceTexture.java), a structure view (TextureView.java), a general view, or referred to as a view (View.java), or the like) all can implement corresponding functions shown in FIG. 16 under control of the native framework. Therefore, from another logical perspective, the solution for managing and controlling the buffer shown in FIG. 16 may be implemented by the main rendering module shown in FIG. 8. Specifically, in some implementations, the solution implementation shown in FIG. 16 may be implemented by a main drawing unit.

In this example, the BufferQueueProducer.cpp is implemented by a server corresponding to an IGraphicBufferProducer, and is responsible for applying for a buffer. Correspondingly, a BufferQueueConsumer.cpp is implemented by a server corresponding to an IGraphicBufferProducer, and is a buffer consumer. In this application, when a new buffer needs to be produced (for example, the flutter framework receives a wakeup indication), a new buffer may be applied for by using the BufferQueueProducer.cpp, to draw and render new content on the newly applied buffer.

When a data frame is valid, that is, when onFrameAvailable is invoked, GLSurfaceView.requestRender() may be invoked to display a requirement to perform rendering, that is, trigger onDrawFrame() of a Renderer. In addition, as shown in FIG. 16, the Android_graphics_SurfaceTexture.cpp may further send a native callback event (postEventFramNative) to the surfaceTexture.java, so that the surfaceTexture.java sends an empty message (for example, sendEmptyMessage) to the TextureView.java to trigger the TextureView.java to send an invalid message (invalidate) to the View.java, to consume a current buffer.

It may be understood that after the SurfaceTexture is initialized, a JNISurfaceTextureContext listener is disposed in a GLConsumer, and the listener calls back a SurfaceTexture.postEventFromNative method at a Java layer, and further calls back an OnFrameAvailableListener listener registered in the SurfaceTexture, to notify a service layer that a new GraphicBuffer enters the queue.

In this application, because a plurality of buffers are configured, the surfaceTexture.java may trigger an operation of obtaining a current quantity of buffers in S1601 to determine a quantity of buffers that are currently valid, to properly configure consumption of each buffer.

As shown in S1601 in FIG. 16, the surfaceTexture.java performs getBufferCount, that is, obtaining the quantity of buffers that are currently valid (can be consumed). For example, when an existing buffer has not been consumed and a new buffer is produced, a quantity of valid buffers is 2. Correspondingly, after buffer consumption is performed once, the quantity of valid buffers is decreased by 1, and so on.

Then, the surfaceTexture.java sends a nativeGetBufferCount indication to the Android_graphics_SurfaceTexture.cpp, to share the quantity of valid buffers to the surfacetexture in the native framework. In some implementations of this application, when it is determined that the quantity of valid buffers is greater than or equal to 1 (that is, when an available buffer exists), the Android_graphics_SurfaceTexture.cpp may continue to perform a subsequent operation.

In this example, the Android_graphics_SurfaceTexture.cpp may indicate the BufferQueueProducer.cpp to obtain a current buffer size, that is, perform getQueueBufferSize. A size of a buffer may correspond to a size of a texture stored in the buffer. It may be understood that, when the size of the texture is the same as a size of an interface of a currently running application, the buffer may correspond to a buffer displayed by the current application (for example, a shopping application).

In the example in FIG. 16, invalidate corresponding to 1603a may be used to send the first buffer for display and consumption. Through the S1601, the main drawing unit (that is, corresponding to the main drawing thread) may determine that another buffer waiting for consumption exists in the TextureBufferQueue.

The BufferQueueProducer.cpp may send an mCore->mQueue.size() message to the surfaceTexture.java through the Android_graphics_SurfaceTexture.cpp to transfer the size of the buffer, to further indicate the surfaceTexture.java to trigger consumption of content in the unconsumed buffer.

It should be noted that in this example, with reference to the foregoing description of S910, after the display content P1 in the first buffer is consumed through 1603a shown in FIG. 16, the display content P2 in the second buffer may be advanced to the first buffer. Therefore, when a new buffer (for example, display content P3) is subsequently produced, if the display content P2 is not consumed, the display content P3 may enter the second buffer, and is consumed after the display content P2.

Still referring to FIG. 16, as shown in S1602, the surfaceTexture.java may delay sending the sendEmptyMessage to the TextureView.java, that is, sendEmptyMessageDelayed. Delayed time corresponding to the delayed sending may be a length of one Vysnc period. Therefore, the sendEmptyMessage is sent in a next Vsync period, and 1603b is triggered to consume the display content P2.

It may be understood that, through the internal implementation shown in FIG. 16, the solution implementation of determining the quantity of valid buffers in S1601 is used in combination with the solution implementation of delaying sending an indication for consuming a buffer in S1602, so that in a Vsync period, the TextureView.java does not receive two indications for consuming a buffer. Therefore, it is ensured that a buffer is consumed normally when a plurality of buffers exist in the TextureBufferQueue.

In this way, with the foregoing descriptions of FIG. 9A to FIG. 9C-FIG. 16, in this example, the native framework wakes up the flutter framework in advance, so that a buffer produced in the next Vsync period starts to be produced in a current Vsync period. In this way, a buffer that has a relatively long production time can be produced and placed into the queue before a Vsync signal corresponding to sending for display arrives. This avoids a failure in sending for display caused by a failure in producing a buffer in time, thereby resolving a corresponding display stuttering problem.

With reference to the descriptions of FIG. 9A to FIG. 9C and FIG. 16, in the foregoing example, the solution in which a plurality of buffers are configured in the TextureBufferQueue is still used, so that a buffer that is produced in advance does not overwrite an unconsumed buffer. In the foregoing example, in the configuration of the plurality of buffers, a new buffer may be caused by a corresponding wakeup indication being initiated in advance. It may be understood that in some other scenarios, even if a buffer is not produced in advance, two buffers may overlap.

As a result, if an existing single buffer solution shown in FIG. 4A to FIG. 4C or FIG. 15 is used, a new buffer may overwrite an existing unconsumed buffer, resulting in problems of frame dropping and frame skipping.

In the following example, the solution implementation in which the plurality of buffers are configured and a corresponding scenario are described by using an example. As shown in the foregoing example, regardless of whether the technical solution in S908-S911 shown in FIG. 9A and FIG. 9B is used to produce a Buffer in advance, configuration of the plurality of buffers can resolve problems of frame dropping and frame skipping that are caused by buffer overwriting in an existing scenario.

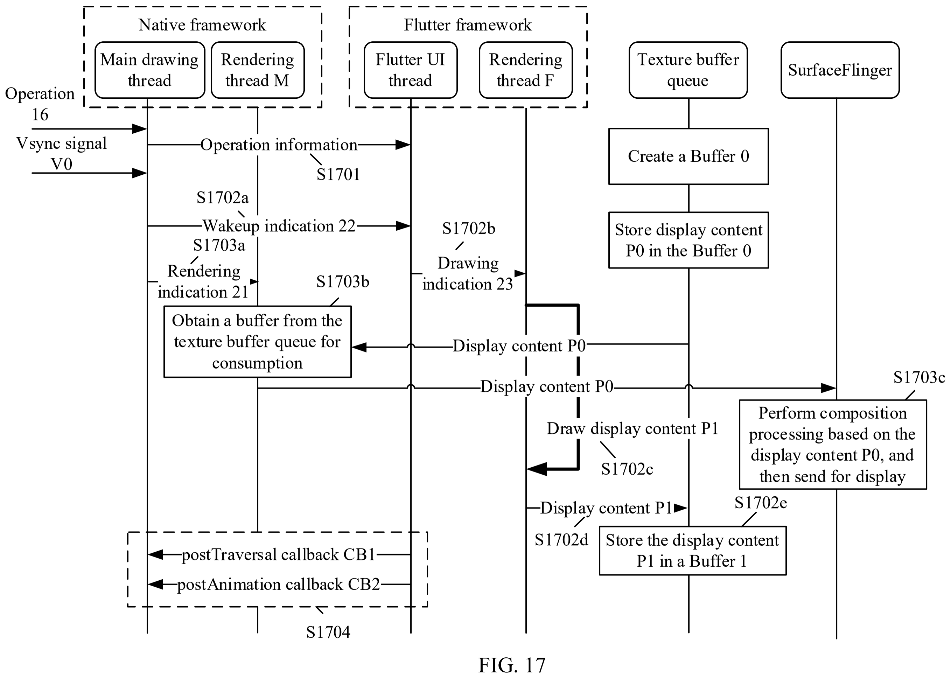

In an example, FIG. 17 is a scenario example of buffer production and consumption.

FIG. 17 shows a specific implementation in a case of normal buffer production and consumption. Execution of steps in FIG. 17 may correspond to S401-S407 shown in FIG. 4A and FIG. 4B.

Brief descriptions are provided below. As shown in FIG. 17, the solution may include the following steps.

S1701: After receiving an operation 16 input by a user, a main drawing thread transparently transmits operation information to a flutter UI thread.

For execution of this step, refer to S401 shown in FIG. 4A. In this way, the flutter UI thread may determine, based on the obtained operation information, whether a sliding operation corresponding to the operation 16 has ended. When the sliding operation has not ended, the flutter UI thread may determine, based on the operation information, that operations such as buffer production corresponding to wakeup need to continue be performed subsequently.

The Flutter UI thread may determine, based on the operation information, subsequent production and consumption of at least an N^{th} frame of image to an (N+3)^{th} frame of image are included.

In this example, similar to the description of the foregoing scenario, a Vsync signal V0 is used to trigger consumption of the N^{th} frame of image and production of an (N+1)^{th} frame of image. By analogy, a Vsync signal V1 is used to trigger consumption of the (N+1)^{th} frame of image and production of an (N+2)^{th} frame of image, and a Vsync signal V2 is used to trigger consumption of the (N+2)^{th} frame of image and production of the (N+3)^{th} frame of image.

The N^{th} frame of image corresponds to display content P0, the (N+1)^{th} frame of image corresponds to display content P1, the (N+2)^{th} frame of image corresponds to display content P2, and the (N+3)^{th} frame of image corresponds to display content P3.

In the example in FIG. 17, an electronic device may implement production of a new buffer based on S1702a to S1702e. The electronic device may further implement consumption of an existing buffer based on S1703a to S1703c.

S1702a: After the Vsync signal V0 arrives, the main drawing thread sends a wakeup indication 22 to a flutter framework.

For execution of this step, refer to S405 shown in FIG. 4A.

The wakeup indication 22 may be generated and sent when the main drawing thread receives a postAnimation callback before the Vsync signal V0, and performs an Animation method in a DoFrame operation after receiving the Vsync signal V0. For a specific implementation, refer to the foregoing description.

In some implementations, the wakeup indication 22 may carry a timestamp and rendering information. The timestamp may be used to indicate the flutter framework to start to produce a new buffer at a moment corresponding to the timestamp. The rendering information may be used by the flutter framework to draw a new buffer texture based on the rendering information.

S1702b: The Flutter UI thread sends a drawing indication 23 to a rendering thread F.

For execution of this step, refer to related description in S406 shown in FIG. 4B. The drawing indication 23 may be used to draw a new buffer based on the rendering information and place the new buffer into a queue.

In some embodiments, the flutterUI thread may send the drawing indication 23 to the rendering thread F when the moment corresponding to the timestamp corresponding to the wakeup indication 22 arrives.

In some other embodiments, the flutterUI thread may directly send the drawing indication 23 to the rendering thread F after receiving the wakeup indication 22. In this implementation, the rendering thread F may start to produce, based on time information carried in the drawing indication 23, a new buffer when the moment corresponding to the timestamp of the wakeup indication 22 arrives.

S1702c: The rendering thread F draws the display content P1.

The drawing process may include processes such as resource waiting (runnable) and rendering processing (running) shown in FIG. 5 or FIG. 6. In the example in FIG. 17, the rendering thread F may complete drawing of the display content P1 after a period of time.

S1702d: The rendering thread F sends the display content P1 to a texture buffer queue (TextureBufferQueue).

S1702e: Store the display content P1 in a Buffer 1 in the texture buffer queue.

In this way, corresponding production to the buffer 1 can be completed. The buffer 1 may include the display content P1 corresponding to the (N+1)^{th} frame of image.

In addition, in parallel with the process of S1702a to S1702e, the electronic device may perform S1703a-S1703b to consume an existing buffer (such as a buffer 0).

S1703a: The main drawing thread sends a rendering indication 21 to a rendering thread M.

For execution of the S1703a-S1703c, refer to related description in S403 shown in FIG. 4A.

The rendering indication 21 may include a Draw instruction, which is used to send an existing buffer for display and consumption.

S1703b: The rendering thread M obtains a buffer from the texture buffer queue for consumption.

For example, the rendering thread M may obtain an existing buffer from the current TextureBufferQueue. The existing buffer may be the buffer 0 that stores the display content P0.

The rendering thread M may further transmit the display content P0 in the buffer 0 to a SurfaceFlinger, so that the SurfaceFlinger performs subsequent processing.

S1703c: The SurfaceFlinger performs composition processing based on the display content P0, and then sends, for display, content obtained after composition processing.

In this way, the N^{th} frame of image can be sent for display and consumption by implementing the S1703a-S1703c.

It should be noted that the execution process of S1702a-S1702e and the execution process of the S1703a-S1703c are independent of each other, and there is no fixed sequence between the two execution processes.

S1704: The Flutter UI thread sends a postTraversal callback CB1 and a postAnimation callback CB2 to the main drawing thread.

For example, after completing production of the buffer 1 in S1702a-S1702e, the flutter UI thread may send the postTraversal callback CB1 to the main drawing thread, so that after a next Vsync signal V1 arrives, the main drawing thread may repeatedly perform a solution similar to that of S1703a-S1703c, to produce the buffer 1.

The Flutter UI thread may further send the postAnimation callback CB2 to the main drawing thread when it is determined that the flutter framework needs to be further waken up subsequently to produce a new buffer.

In this example, an example in which the postTraversal callback CB1 and the postAnimation callback CB2 are sent adjacent to each other or simultaneously is used. In another implementation, sending of the postTraversal callback CB1 and sending of the postAnimation callback CB2 may be independent of each other, and a sending sequence and time between the postTraversal callback CB1 and the postAnimation callback CB2 are not specifically limited.

In this way, through S1701-S1704 shown in FIG. 17, consumption of the buffer 0 in a Vsync period 0-1 is completed, and the TextureBufferQueue is cleared. Subsequently, the produced buffer 1 may re-enter the TextureBufferQueue to wait for next consumption.

After the buffer 0 is consumed, a display screen of the electronic device may display the N^{th} frame of image.

In a normal case, if in a next Vsync period 1-2, the electronic device can complete consumption of the buffer 1 and production of the buffer 2 as shown in FIG. 17, the electronic device can switch to display the (N+1)^{th} frame of image.

However, rendering duration corresponding to different buffers is significantly different. Therefore, in an actual implementation process, it is difficult to ensure that production of one buffer and consumption of one buffer can be successfully completed in each Vsync period in the sequence shown in FIG. 17. As a result, problems such as display stuttering, frame dropping, and frame skipping may occur.

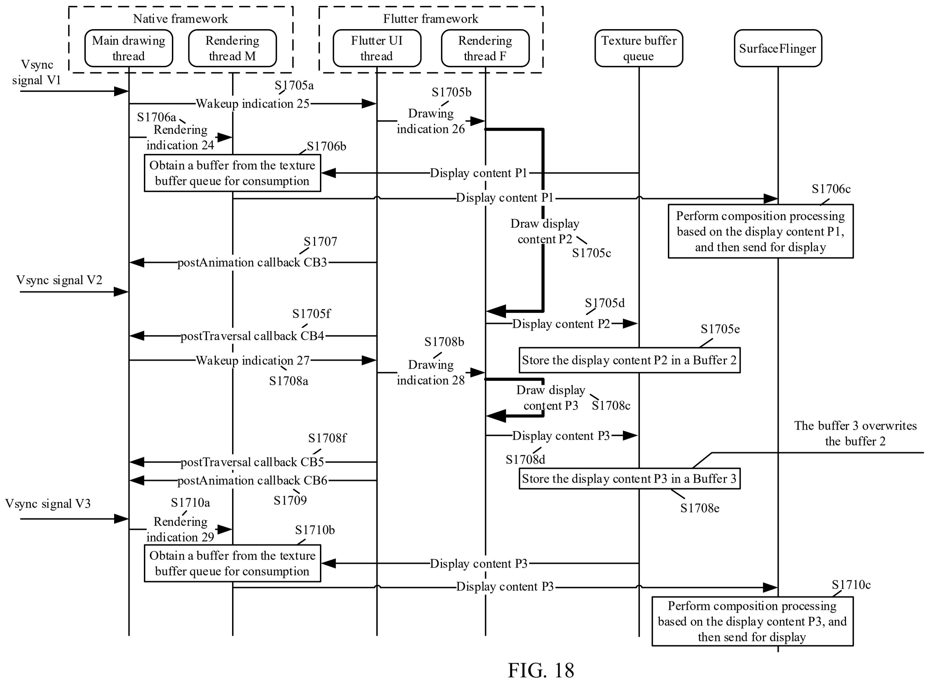

For example, FIG. 18 shows an example of buffer production and consumption in an abnormal scenario.

The solution shown in FIG. 18 may be an example of corresponding processing performed when a subsequent Vsync signal is received after S1704 shown in FIG. 17. For example, after S1704 is performed, S1705a shown in FIG. 18 may be performed; and/or after S1704 is performed, S1706a shown in FIG. 18 may be performed.

S1705a: After the Vsync signal V1 arrives, the main drawing thread sends a wakeup indication 25 to the flutter framework.

S1705b: The Flutter UI thread sends a drawing indication 26 to the rendering thread F.

S1705c: The rendering thread F draws the display content P2.

S1705d: The rendering thread F sends the display content P2 to the TextureBufferQueue.

S1705e: Store the display content P2 in a Buffer 2 in the TextureBufferQueue.

S1705f: The Flutter UI thread sends a postTraversal callback CB4 to the main drawing thread.

In this example, production time of the display content P2 is relatively long. For example, before rendering starts, it takes a relatively long time to wait for a resource; and/or after rendering starts, rendering processing takes a relatively long time. As a result, the display content P2 can be rendered and enter the queue only after a next Vsync signal V2 arrives.

Correspondingly, after the new buffer 2 (corresponding to the display content P2) enters the queue, the flutter UI thread performs S1705f. In this way, the main drawing thread accepts the postTraversal callback CB4 only after the Vsync signal V2 arrives.

S1706a: The main drawing thread sends a rendering indication 24 to the rendering thread M.

S1706b: The rendering thread M obtains a buffer from the texture buffer queue for consumption.

S1706c: The SurfaceFlinger performs composition processing based on the display content P1, and then sends, for display, content obtained after composition processing.

In the Vsync period 1-2, the electronic device may switch, based on S1706a-S1706c, to display the (N+1)^{th} frame of image.

In this example, because a requirement of rendering a subsequent frame of image (for example, the (N+3)^{th} frame of image corresponding to a buffer 3) exists, before the Vsync signal V2, the flutter UI thread may perform S1707 to send a postAnimation callback CB3 to the main drawing thread.

In this way, in the Vsync period 1-2, the electronic device may complete consumption of the (N+1)^{th} frame of image (that is, the buffer 1), and correspondingly the TextureBufferQueue is cleared to 0. However, production of the new buffer 2 is not completed in the Vsync period 0-1. Therefore, when the next Vsync signal V2 arrives, the main drawing thread does not receive the postTraversal callback CB4 for consuming the new buffer.

As a result, after the Vsync signal V2 arrives, the main drawing thread does not trigger consumption of the buffer in a corresponding Vsync period 2-3, and current displayed content is not updated.

For example, in the Vsync period 2-3, the electronic device may further perform S1708a-S1708f and S1709.

S1708a: The main drawing thread sends a wakeup indication 27 to the flutter framework.

S1708b: The Flutter UI thread sends a drawing indication 28 to the rendering thread F.

S1708c: The rendering thread F draws the display content P3.

S1708d: The rendering thread F sends the display content P3 to the TextureBufferQueue.

S1708e: Store the display content P3 in a Buffer 3 in the TextureBufferQueue.

S1708f: The Flutter UI thread sends a postTraversal callback CB5 to the main drawing thread.

The S1708a-S1708f may be used to produce a new buffer in the Vsync period 2-3. It may be understood that with reference to the description of S1707, in the Vsync period 1-2, the flutter UI thread may determine that a requirement of producing a new buffer exists subsequently, and correspondingly delivers the postAnimation callback CB3. Therefore, after the Vsync signal V2 arrives, the main drawing thread may perform the Animation method in the DoFrame operation to produce the buffer 3 corresponding to the (N+3)^{th} frame of image.

It should be noted that, due to a delay in production of the previous buffer 2, the existing buffer 2 is not sent for display and consumption in the Vsync period 2-3. Therefore, when production of the buffer 3 is completed, the buffer 2 is still stored in the TextureBufferQueue.

As a result, due to current single buffer configuration, after the buffer 3 is produced and enters the queue, the buffer 3 overwrites the original unconsumed buffer 2. In other words, after the buffer 3 is produced and enters the queue, the buffer 3 overwrites the unconsumed buffer 2.

In the Vsync period 2-3, when determining that a requirement of producing a new buffer exists subsequently, the flutter UI framework may perform S1709, that is, send a postAnimation callback CB6 to the main drawing thread.

It may be understood that, when the Vsync period 2-3 ends, the electronic device may still display the (N+1)^{th} frame of image corresponding to the buffer 1, and the TextureBufferQueue correspondingly stores the display content P3 corresponding to the (N+3)^{th} frame of image.

Then, after the Vsync signal V3 arrives, the electronic device may perform the following S1710a-S1710c to consume the new buffer.

S1710a: The main drawing thread sends a rendering indication 29 to the rendering thread M.

S1710b: The rendering thread M obtains a buffer from the texture buffer queue for consumption.

S1710c: The SurfaceFlinger performs composition processing based on the display content P3, and then sends, for display, content obtained after composition processing.

In this way, after the Vsync signal V3 arrives, the electronic device may perform a Traversal method in DoFrame based on the postTraversal callback CB5 and triggering of the Vsync signal V3, and read a buffer from the current TextureBufferQueue for consumption.

With reference to the foregoing description of the Vsync period 2-3, when the Vsync signal V3 arrives, the TextureBufferQueue may store the buffer 3. In this way, through S1710a-S1710c, the electronic device may switch to display the corresponding (N+3)^{th} frame of image on the display screen.

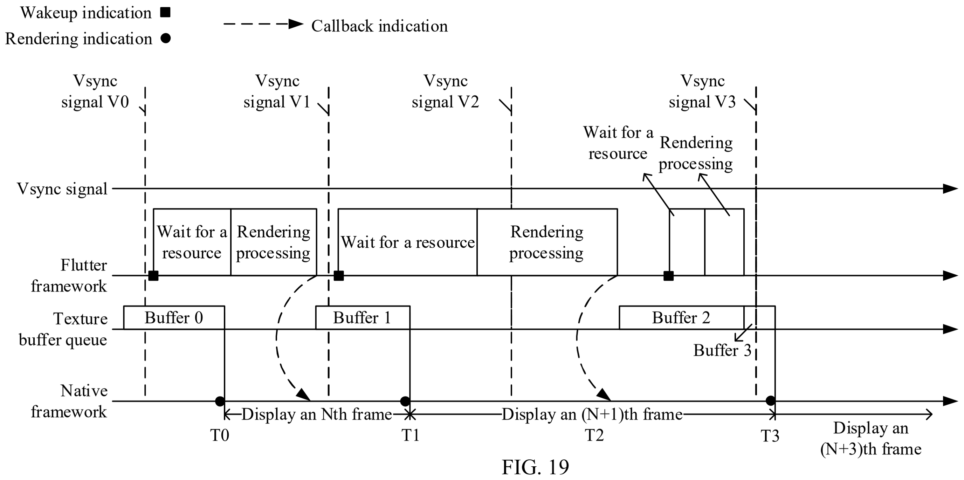

In the scenario shown in FIG. 17-FIG. 18, corresponding buffer production and consumption logic is shown in FIG. 19.

As shown in FIG. 19, after the Vsync signal V0 arrives, the electronic device may complete consumption of the existing buffer 0 at a moment T0, and start to display the N^{th} frame of image; and correspondingly, before the Vsync signal V1 arrives, complete production of the buffer 1. Therefore, before the Vsync signal V1 arrives, the main drawing thread may receive a corresponding callback for consuming the buffer 1.

After the Vsync signal V1 arrives, the electronic device may consume the buffer 1, and switch to display the (N+1)^{th} frame of image at a moment T1. After the Vsync signal V1 arrives, the electronic device may further start to produce the buffer 2.

As described in FIG. 18, the buffer 2 may be produced and enter the queue after the Vsync signal V3 arrives.

In this way, in the Vsync period 1-2, the main drawing thread does not receive a callback that is used to consume a buffer after the Vsync signal V2 arrives.

Therefore, after the Vsync signal V2 arrives, consumption of the buffer is not triggered. In this case, in the Vsync period 2-3, the electronic device does not update the displayed image.

In the Vsync period 2-3, the electronic device may produce the buffer 2 and place the buffer 2 into the queue, and produce the buffer 3 and place the buffer 3 into the queue. Due to a single buffer setting, after production of the buffer 3 is completed, the buffer 3 overwrites the produced but unconsumed buffer 2 when being placed into the TextureBufferQueue.

In this way, when the Vsync signal 3 arrives, the electronic device may continue to display the (N+1)^{th} frame of image, and the TextureBufferQueue may include the buffer 3 but does not include the buffer 2.

Therefore, after the Vsync signal 3 arrives, the electronic device may obtain the buffer 3 from the TextureBufferQueue for consumption and display, so that a display interface switches from the (N+1)^{th} frame of image to the (N+3)^{th} frame of image.

In this case, the (N+2)^{th} frame of image is dropped, which corresponds to frame dropping and frame skipping in a display process.

In this embodiment, the foregoing problem can be effectively avoided by using the configuration of a plurality of buffers shown in FIG. 15.

It should be noted that, in some embodiments, the solution implementation in which the electronic device configures a plurality of buffers for the TextureBufferQueue may be flexibly determined based on a current scenario.

For example, the electronic device may determine, in a similar form in combination with any one or more of the plurality of manners provided in S908 in FIG. 9B, that a plurality of buffers need to be disposed. For a specific implementation, refer to the foregoing description. Details are not described herein again.

In the following example, an example in which a first buffer and a second buffer are configured in the TextureBufferQueue is used. Different buffers may be used to store different display content.

In this application, when a plurality of buffers are scheduled, processing logic of different producers and consumers for different buffers may be controlled, to implement normal consumption and production logic.

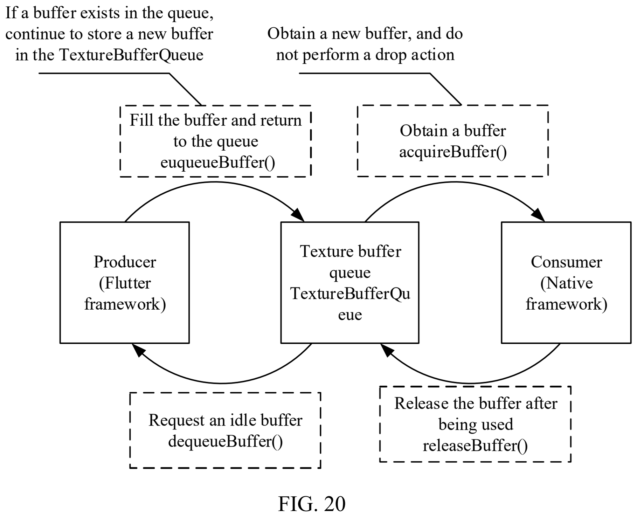

For example, reference is made to FIG. 20 in combination with FIG. 3.

When the first buffer and the second buffer are configured in the TextureBufferQueue, serving as a buffer producer, the flutter framework serves may request an idle buffer from the TextureBufferQueue by using dequeueBuffer(), similar to the current solution provided in FIG. 3; and fill the buffer by using euqueueBuffer() and return the buffer to the queue.

It should be noted that in this embodiment, when euqueueBuffer() is used to place the buffer into the queue, drop processing is not performed on an existing buffer. In this embodiment, if a buffer exists in the queue, a new buffer continues to be stored in the TextureBufferQueue.

For example, when data already exists in the first buffer, the flutter framework may place newly produced data into the second buffer, and keep the data stored in the first buffer. This avoids discarding the unconsumed buffer.

When the first buffer and the second buffer are configured in the TextureBufferQueue, serving as a buffer consumer, the native framework may obtain a buffer from the TextureBufferQueue by using acquireBuffer(), similar to the current solution provided in FIG. 3; and release buffer by using releaseBuffer() after the buffer is consumed, to avoid repeated consumption of the buffer.

It should be noted that in this embodiment, because a plurality of buffers exist, acquireBuffer() may be used to obtain one of the plurality of buffers without performing drop processing on another buffer.

For example, acquireBuffer() may be used to obtain content in the first buffer for consumption. If the second buffer further includes other content, the content in the second buffer continues to be kept.

In some embodiments of this application, after the content in the first buffer is consumed and released, the content in the second buffer may be advanced to the first buffer. To facilitate next consumption, the native framework may continue to obtain, by using acquireBuffer(), the unconsumed content for display and consumption. The implementation of preferentially consuming the first buffer may also be described as follows: A priority of the first buffer is higher than that of the second buffer. In this case, when consuming a buffer, the native framework may preferentially consume the content in the first buffer with a higher priority.

In some other embodiments of this application, in addition to storing corresponding display content, each buffer in the TextureBufferQueue may be configured with a time identifier. For example, when the first buffer stores the display content P2, the time identifier of the first buffer may be a moment at which the display content P2 enters the first buffer. For another example, when the second buffer stores the display content P3, the time identifier of the second buffer may be a moment at which the display content P3 enters the second buffer.

In this way, when consuming a buffer, the native framework may obtain one buffer for consumption each time in a sequence of time identifiers of the buffers from early to late. For example, when the TextureBufferQueue includes the first buffer storing the display content P2 and the second buffer storing the display content P3, the native framework may preferentially obtain, based on that the time identifier of the first buffer is earlier than that of the second buffer, the display content P2 in the first buffer first for consumption.

It may be understood that in this implementation, after the display content P2 in the first buffer is consumed, the first buffer is released and becomes empty. The display content P3 in the second buffer may continue to be kept in the second buffer. The time identifier of the second buffer may be the moment at which the display content P3 enters the second buffer. After a new buffer 4 is produced, the buffer 4 may be stored in the idle first buffer. In this case, the time identifier of the first buffer changes to a moment at which the buffer 4 enters the first buffer.

In this way, when consuming a buffer, the native framework may obtain, based on that the time identifier of the second buffer is earlier than that of the first buffer, the display content P3 from the second buffer for consumption. This is performed cyclically.

In the following example, an example in which the priority of the first buffer is higher than that of the second buffer, and after the content in the first buffer is consumed, the content in the second buffer is advanced to the first buffer is used.

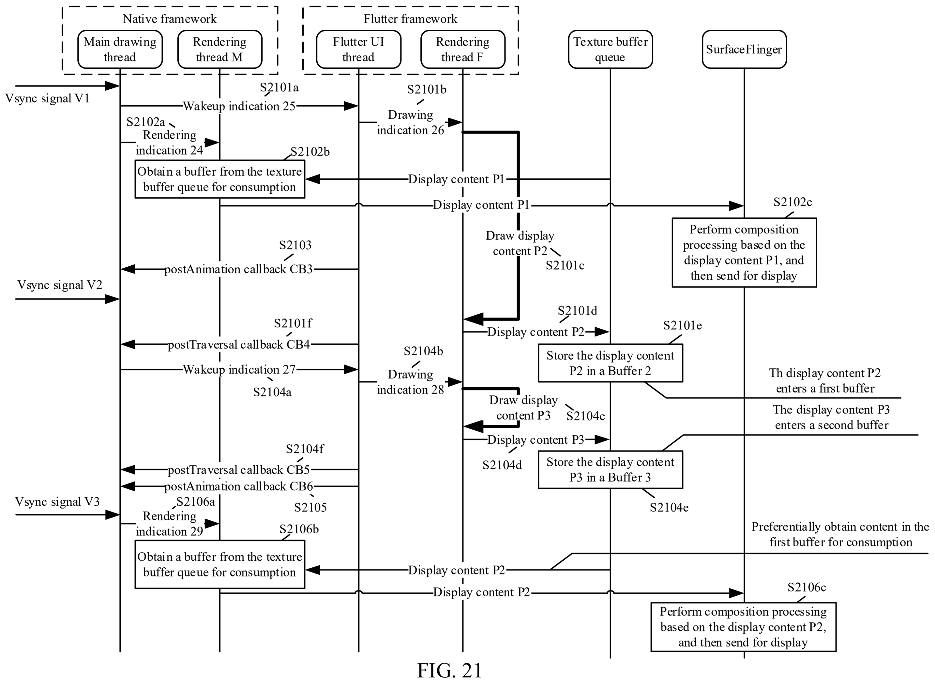

FIG. 21 is a schematic flowchart of an image processing method according to an embodiment of this application.

In the scenario provided in FIG. 21, an electronic device may run an application under indication of a user. For example, the application is a shopping application. Similar to the descriptions of the foregoing scenarios, in this example, the user may input the foregoing sliding operation in an interface of the shopping application. For example, the sliding operation may correspond to the operation 16 in the foregoing scenario.

In this example, a first buffer and a second buffer may be disposed in a TextureBufferQueue in the electronic device. A priority of the first buffer is higher than that of the second buffer.

With reference to the descriptions of FIG. 17-FIG. 18, before a Vsync signal V1 shown in FIG. 21 arrives, the electronic device may perform, based on the solution implementation shown in FIG. 17, consumption of a buffer corresponding to an N^{th} frame of image and production of a buffer corresponding to an (N+1)^{th} frame of image. Display content P1 of the (N+1)^{th} frame of image may be stored in the first buffer. When the Vsync signal V1 arrives, the second buffer is empty.

As shown in FIG. 21, the solution may include the following steps.

S2101a: After the Vsync signal V1 arrives, a main drawing thread sends a wakeup indication 25 to a flutter framework.

S2101b: The Flutter UI thread sends a drawing indication 26 to a rendering thread F.

S2101c: The rendering thread F draws display content P2.

S2101d: The rendering thread F sends the display content P2 to the TextureBufferQueue.

S2101e: Store the display content P2 in a Buffer 2 in the TextureBufferQueue.

S2101f: The Flutter UI thread sends a postTraversal callback CB4 to the main drawing thread.

In this example, for execution of the S2101a-S2101f, refer to S1705a-S1705f shown in FIG. 18.

It should be noted that in this example, when production of the buffer 2 is completed, a previous buffer (such as a buffer 1) has been sent for display and consumption. Therefore, after a Vsync signal V2 arrives, when production of the buffer 2 is completed, both the first buffer and the second buffer in the TextureBufferQueue are empty.

Therefore, in S2101d-S2101e, after completing production of the buffer 2, the rendering thread F may place the display content P2 in the buffer 2 into the first buffer in the TextureBufferQueue, so that when subsequent consumption needs to be performed, the buffer 2 is first consumed.

In this way, after the buffer 2 enters the queue (that is, in a Vsync period 2-3), the first buffer in the TextureBufferQueue may store the display content P2 corresponding to the buffer 2, and the second buffer is empty.

Similar to the description in FIG. 18, in a Vsync period 1-2, the electronic device may further consume an existing buffer.

For example, as shown in FIG. 21, the existing buffer may be the buffer 1, and the buffer 1 may be consumed through S2102a-S2102c.

S2102a: The main drawing thread sends a rendering indication 24 to a rendering thread M.

S2102b: The rendering thread M obtains a buffer from the texture buffer queue for consumption.

S2102c: A SurfaceFlinger performs composition processing based on the display content P1, and then sends, for display, content obtained after composition processing.

In this example, for the execution process of the S2102a-S2102c, refer to S1706a-S1706c in FIG. 18.

In this way, the (N+1)^{th} frame of image can be sent for display in the Vsync period 1-2.

It may be understood that, in the Vsync period 1-2, the TextureBufferQueue may be described in a time sequence as follows: When the Vsync signal V1 arrives, the first buffer stores the display content P1. After S2102c is performed to complete consumption, both the first buffer and the second buffer are empty. In the Vysnc cycle 1-2, because production of a new buffer is not completed, it is known that when the Vsync signal V2 arrives, both the first buffer and the second buffer are empty.

As shown in FIG. 21, in the Vsync period 1-2, it may be further determined that the flutter UI thread needs to be waken up again in a next Vsync period to produce a new buffer. Correspondingly, the flutter UI thread may perform S2103 in the Vsync period 1-2, and send a postAnimation callback CB3 to the main drawing thread.

In this way, the electronic device may start to perform processing in a next Vsync period after the Vsync signal V2 arrives.

Processing in a Vsync period 2-3 may include the following S2104a-S2104f, S2105, and the like.

S2104a: The main drawing thread sends a wakeup indication 27 to the flutter framework.

S2104b: The Flutter UI thread sends a drawing indication 28 to the rendering thread F.

S2104c: The rendering thread F draws display content P3.

S2104d: The rendering thread F sends the display content P3 to the TextureBufferQueue.

S2104e: Store the display content P3 in a Buffer 3 in the TextureBufferQueue.

S2104f: The Flutter UI thread sends a postTraversal callback CB5 to the main drawing thread.

In this example, through the S2104a-S2104f, the electronic device may produce, after the Vsync signal V2 arrives, a new buffer based on the postAnimation callback CB3 received in S2103. The new buffer may be the buffer 3.

With reference to the foregoing description of production of the buffer 2, in the Vsync period 2-3, the electronic device may complete production of two buffers. The buffer 2 is first produced and placed into the queue. The buffer 2 may be stored in the first buffer. Then, the buffer 3 is produced and placed into the queue. The buffer 3 may be stored in the second buffer.

In addition, if there is a new buffer (for example, a buffer 4 corresponding to an (N+4)^{th} frame of image) that needs to be produced, in the Vsync period 2-3, S2105 is correspondingly performed, and the flutter UI thread further sends a postAnimation callback CB6 to the main drawing thread.

In this way, when the Vsync period 2-3 ends, in the TextureBufferQueue, the first buffer may store the display content P2, and the second buffer may store the display content P3.

The electronic device may perform the following S2106a-S2106c after a Vsync signal V3 arrives.

S2106a: The main drawing thread sends a rendering indication 29 to the rendering thread M.

S2106b: The rendering thread M obtains a buffer from the texture buffer queue for consumption.

S2106c: The SurfaceFlinger performs composition processing based on the display content P2, and then sends, for display, content obtained after composition processing.

With reference to the solution description of buffer consumption in FIG. 20, in this example, when consuming a buffer, the main drawing thread may preferentially consume the first buffer. The first buffer may store the unconsumed display content P2.

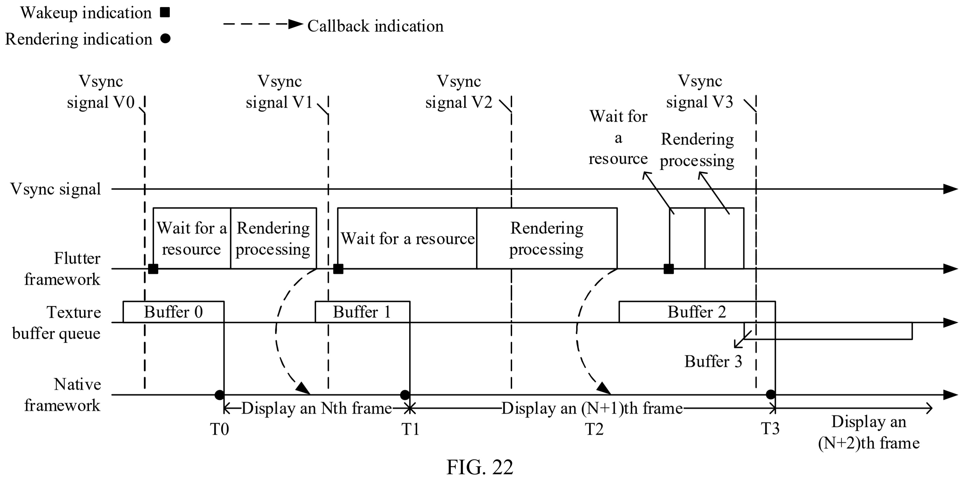

The example of buffer consumption and production logic in the solution execution process in FIG. 21 is described with reference to FIG. 22.

Compared with the existing solution shown in FIG. 19, it may be learned that, although production of the buffer 2 is not completed in the Vsync period 2-3, the buffer 2 is not displayed in the Vsync period 2-3. However, based on the configuration of the first buffer and the second buffer shown in FIG. 21, in a Vsync period 3-4, the electronic device may display the (N+2)^{th} frame of image instead of directly skipping the (N+2)^{th} frame of image to display the (N+3)^{th} frame of image. This resolves a buffer loss problem in a case of single buffer configuration.

It may be understood that, in FIG. 15-FIG. 22, configuration and use of a plurality of (for example, at least two) buffers in the TextureBufferQueue are illustrated by using an example in which buffer production is not performed in advance, thereby resolving common problems of display stuttering and frame skipping caused by frame dropping.

In this way, this embodiment of this application provides, through FIG. 9A to FIG. 9C-FIG. 17, the solution implementation for advancing buffer production, and further provides the solution implementation of dual-buffer configuration through FIG. 15-FIG. 22. In different scenarios, any one of the two solutions may be select to mitigate a problem that image display is stuttered after a sliding operation of a user is received. Alternatively, the two solutions may be mutually configured to mitigate stuttering in image display occurred after a user performs a sliding operation.

It may be understood that, to achieve the foregoing functions, the electronic device provided in the embodiments of this application includes corresponding hardware structures and/or software modules for performing the functions. A person skilled in the art may be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the foregoing electronic device may be divided into functional modules based on the foregoing method examples. For example, each functional module may be obtained through division for each corresponding function, or two or more functions may be integrated into one processing module. The integrated module may be implemented in a form of hardware, or may be implemented in a form of a software functional module. It should be noted that division of the modules in the embodiments of this application is an example, and is merely logical function division. During actual implementation, there may be another division manner.

The foregoing mainly describes the solutions provided in the embodiments of this application from a perspective of functional modules. A person skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each specific application, but it should not be considered that the implementation goes beyond the scope this application.

The integrated module may be implemented in a form of hardware, or may be implemented in a form of a software functional module. It should be noted that division of the modules in the embodiments of this application is an example, and is merely logical function division. During actual implementation, there may be another division manner.

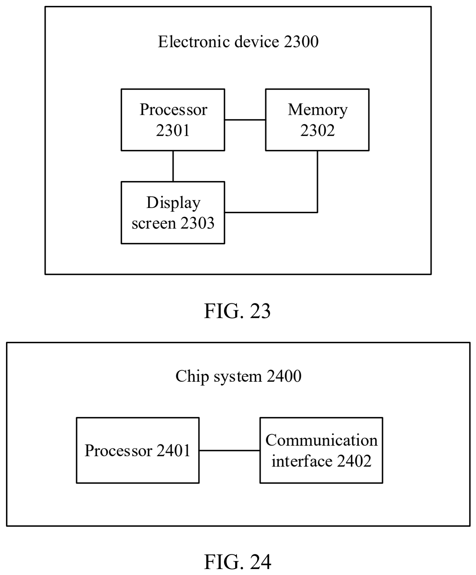

For example, FIG. 23 is a schematic diagram of composition of an electronic device 2300. As shown in FIG. 23, the electronic device 2300 may include a processor 2301 and a memory 2302. The memory 2302 is configured to store computer-executable instructions. A display screen 2303 may be further displayed in the electronic device. The display screen 2303 may display an interface of an application under indication of a user. The display screen 2303 may further receive a sliding operation of the user, to trigger execution of any method provided in the embodiments of this application. For example, in some embodiments, when the processor 2301 executes the instructions stored in the memory 2302, the electronic device 2300 is enabled to perform the method shown in any one of the foregoing embodiments.

It should be noted that all related content of the steps in the foregoing method embodiments may be cited to function description of a corresponding functional module. Details are not described herein again.

FIG. 24 is a schematic diagram of composition of a chip system 2400. The chip system 2400 may include a processor 2401 and a communication interface 2402, and is configured to support a related device in implementing the functions in the foregoing embodiments. In a possible design, the chip system further includes a memory, configured to store program instructions and data that are necessary for an electronic device. The chip system may include a chip, or may include a chip and another discrete device. It should be noted that in some implementations of this application, the communication interface 2402 may also be referred to as an interface circuit.

It should be noted that all related content of the steps in the foregoing method embodiments may be cited to function description of a corresponding functional module. Details are not described herein again.

All or some of the functions, actions, operations, or steps in the foregoing embodiments may be implemented by using software, hardware, firmware, or any combination thereof. When being implemented by using a software program, all or some of the foregoing embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium accessible by a computer, or include one or more data storage devices such as a server or a data center integrating an available medium. The available medium may be a magnetic medium (for example, a floppy disk, a hard disk, or a magnetic tape), an optical medium (for example, a DVD), or a semiconductor medium (for example, a solid state disk (solid state disk, SSD)), or the like.

Although this application is described with reference to specific features and embodiments, it is clear that various modifications and combinations may be made to this application without departing from the spirit and scope of this application. Correspondingly, this specification and the accompanying drawings are merely example description of this application defined by the appended claims and are considered to cover any and all of modifications, variations, combinations, or equivalents in the scope of this application. Clearly, a person skilled in the art can make various modifications and variations to this application without departing from the spirit and scope of this application. In this way, this application is also intended to include these modifications and variations made to this application if they fall within the scope of the claims of this application and equivalent technologies thereof.

## Claims

1. An image processing method, wherein the method is applied to an electronic device, and the method comprises:
receiving a first operation of a user;
in response to the first operation, running a first application, and presenting an interface of the first application;
receiving a second operation performed by the user in the interface of the first application, wherein the second operation is a sliding operation;
in response to the second operation, performing a first drawing operation in a first synchronization Vsync period to obtain a first image; and
in response to the second operation, performing a second drawing operation in the first synchronization Vsync period to obtain a second image, wherein a moment at which the first Vsync period starts is a moment at which a first Vsync signal is received, and a moment at which the first Vsync signal period ends is a moment at which a second Vsync signal is received; the first Vsync signal and the second Vsync signal are two adjacent Vsync signals, and start time of the second drawing operation is later than start time of the first drawing operation; and the first image and the second image are images sequentially displayed by the electronic device in response to the second operation.

2. The method according to claim 1 or 2, wherein the method further comprises:
after the second Vsync signal is generated, performing, by the electronic device, a first sending for display operation, wherein the first sending for display operation is used to control a display screen of the electronic device to display the first image; and
after a third Vsync signal is generated, performing, by the electronic device, a second sending for display operation, wherein the second sending for display operation is used to control the display screen of the electronic device to display the second image, wherein
the third Vsync signal is later than the second Vsync signal, and the third Vsync signal is adjacent to the second Vsync signal.

3. The method according to claim 2, wherein
a texture buffer queueTextureBufferQueue is configured in the electronic device, wherein the TextureBufferQueue comprises at least one valid buffer buffer, and each of the at least one valid buffer stores one draw image.

4. The method according to claim 3, wherein the at least one valid buffer comprises a first buffer; and
the performing a first drawing operation in a first synchronization Vsync period to obtain a first image comprises:
performing the first drawing operation in the first Vsync period to obtain the first image, and storing the first image in the first buffer when the first buffer is empty.

5. The method according to claim 4, wherein the at least one valid buffer comprises a second buffer; and
the performing a second drawing operation in the first synchronization Vsync period to obtain a second image comprises:
performing the second drawing operation in the first Vsync period to obtain the second image, and storing the second image in the second buffer when the first buffer is not empty.

6. The method according to claim 5, wherein a sending for display priority of the first buffer is higher than that of the second buffer; and
the performing, by the electronic device, a first sending for display operation comprises:
obtaining the first image from the first buffer with a higher sending for display priority, to perform composition based on the first image and send a composite image for display.

7. The method according to claim 6, wherein
after the performing, by the electronic device, a first sending for display operation, the method further comprises:
releasing the first image in the first buffer, wherein the first buffer is empty after releasing.

8. The method according to claim 6 or 7, wherein after the performing, by the electronic device, a first sending for display operation, the method further comprises:
storing, in the first buffer, the second image in the second buffer, to release the second image in the second buffer.

9. The method according to claim 8, wherein
the performing, by the electronic device, a second sending for display operation comprises:
obtaining the second image from the first buffer, to perform composition based on the second image and send a composite image for display.

10. The method according to any one of claims 1-9, wherein
a callback queue is configured in the electronic device, and the callback queue is used to store a sending for display callback and/or a drawing callback;
before the performing, by the electronic device, a first drawing operation, the method further comprises:
after the first Vsync signal is generated, determining, by the electronic device, that the callback queue comprises a first drawing callback, wherein the first drawing callback comprises first image information, and the first image information is used to draw the first image; and
the performing, by the electronic device, a first drawing operation comprises:
generating, by the electronic device, a first wakeup indication based on the first drawing callback, wherein the first wakeup indication carries the second image information, and the first wakeup indication is used to wake up a flutter rendering module configured in the electronic device to perform a drawing operation based on the second image information; and
performing, by the flutter rendering module, the first drawing operation based on the first wakeup indication, to obtain the second image.

11. The method according to claim 10, wherein
the performing, by the electronic device, a second drawing operation comprises:
generating, by the electronic device, a second wakeup indication, wherein the second wakeup indication carries the second image information, and the second wakeup indication is used to wake up the flutter rendering module to perform a drawing operation based on the second image information; and
performing, by the flutter rendering module, the second drawing operation based on the second wakeup indication, to obtain the second image.

12. The method according to claim 11, wherein the method further comprises:
after the first Vsync signal is generated, determining, by the electronic device, that there is a second image that needs to continue to be drawn; and
the generating, by the electronic device, a second wakeup indication comprises:
after determining that there is a second image that needs to continue to be drawn, triggering, by the electronic device, generation of the second wakeup indication after preset duration.

13. The method according to claim 12, wherein the preset duration corresponds to 2/3 of the first Vsync period.

14. The method according to any one of claims 10-13, wherein the method further comprises:
performing, by the electronic device, encapsulation processing on a wakeup indication generated in a first encapsulation interval and a wakeup indication generated in a second encapsulation interval, so that a type of the wakeup indication related to the encapsulation processing is adjusted, wherein an adjusted type of the wakeup indication is a non-flutter type, wherein
a start point of the first encapsulation interval corresponds to the electronic device determining that the callback queue comprises a drawing callback, and an end point of the first encapsulation interval corresponds to generating a wakeup indication corresponding to the drawing callback; and
a start point of the second encapsulation interval corresponds to the electronic device generating the wakeup indication, and an end point of the second encapsulation interval corresponds to the electronic device determining, after a next Vsync signal is generated, whether the callback queue comprises a drawing callback.

15. The method according to any one of claims 2-14, wherein
before the performing, by the electronic device, a second sending for display operation, the method further comprises:
obtaining, by the electronic device, a quantity of valid buffers in the TextureBufferQueue; and
the performing, by the electronic device, a second sending for display operation comprises:
when the quantity of valid buffers is greater than or equal to 1, performing, by the electronic device, the second sending for display operation.

16. The method according to any one of claims 10-14, wherein
the drawing callback is a postAnimation callback; and
the sending for display callback is a postTraversal callback.

17. An electronic device, wherein the electronic device comprises a display screen, a memory, and one or more processors, and the display screen and the memory are coupled to the processor; and
the memory is configured to store a computer program code, the computer program code comprises computer instructions, and when the processor executes the computer instructions, the electronic device is enabled to perform the method according to any one of claims 1-16.

18. A chip system, wherein the chip system is applied to an electronic device; the chip system comprises one or more interface circuits and one or more processors; the interface circuit is interconnected to the processor through a line; the interface circuit is configured to receive a signal from a memory of the electronic device, and send the signal to the processor, wherein the signal comprises computer instructions stored in the memory; and when the processor executes the computer instructions, the electronic device performs the method according to any one of claims 1-16.

19. A computer-readable storage medium, comprising computer instructions, wherein when the computer instructions are run on an electronic device, the electronic device is enabled to perform the method according to any one of claims 1-16.
